(19) Europäisches Patentamt
European Patent Office
Office européen des brevets

(11) EP 2 810 784 A1

(12) EUROPEAN PATENT APPLICATION
published in accordance with Art. 153(4) EPC

(43) Date of publication:
**10.12.2014 Bulletin 2014/50**

(21) Application number: **13743599.6**

(22) Date of filing: **25.01.2013**

(51) Int Cl.:
***B41N 1/12*** *(2006.01)* ***C08F 2/44*** *(2006.01)*
***C08F 283/00*** *(2006.01)* ***G03F 7/00*** *(2006.01)*
***G03F 7/035*** *(2006.01)*

(86) International application number:
**PCT/JP2013/051546**

(87) International publication number:
**WO 2013/115082 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2012 JP 2012018836**

(71) Applicant: **Fujifilm Corporation**
**Minato-ku**
**Tokyo 106-8620 (JP)**

(72) Inventor: **SATO Hiroshi**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

# (54) RESIN COMPOSITION FOR LASER-ENGRAVABLE FLEXOGRAPHIC PRINTING PLATE, ORIGINAL PLATE FOR LASER-ENGRAVABLE FLEXOGRAPHIC PRINTING PLATE AND METHOD FOR PRODUCTION THEREOF, AND FLEXOGRAPHIC PRINTING PLATE AND METHOD FOR PRODUCTION THEREOF

(57) To provide a resin composition for a laser-engravable flexographic printing plate that has excellent removability for engraving residue generated when laser-engraving a printing plate precursor and that can give a flexographic printing plate that is excellent in terms of non-tackiness, hardness, printing durability, and halftone shape.

A resin composition for a laser-engravable flexographic printing plate, the resin composition that comprises (Component A) a polyurethane resin having a group represented by Formula (1), (Component B) an ethylenically unsaturated compound, and (Component C) a polymerization initiator

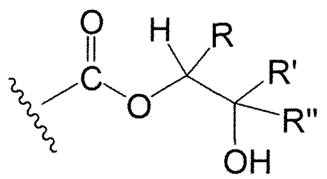

(1)

wherein in the Formula, R and R'' independently denote a hydrogen atom or an alkyl group, R' denotes an alkyl group, R and R' may be linked to form a ring, and the wavy line portion denotes the position of bonding.

EP 2 810 784 A1

**Description**

The present invention relates to a resin composition for a laser-engravable flexographic printing plate, a laser-engravable flexographic printing plate precursor and a process for producing the same, and a flexographic printing plate and a process for making the same.

Background Art

Conventional technologies that are known to improve anti-tackiness (stickiness suppressibility) of a printing plate surface in a flexographic printing plate precursor for laser engraving, include a method of incorporating oil-absorbent inorganic porous fine particles (silica or the like) into a photosensitive resin composition, and adsorbing any tacky adhesive materials (engraving residue) generated at the time of laser engraving (Patent Document 1); and a method of lowering the surface energy by a method of adding a silicone oil or an organic fluorine compound to a printing plate (an external addition method of adding the compound to the plate surface, or an internal addition method of adding the compound to the interior of layers that constitute the plate) (Patent Document 2 and 3).

Patent Document 1: Japanese Patent No. 4024136
Patent Document 2: JP-A-2011-062904 (JP-A denotes a Japanese unexamined patent application publication)
Patent Document 3: Japanese Patent No. 4475505

It is an object of the present invention to provide a resin composition for a laser-engravable flexographic printing plate that has excellent removability for engraving residue generated when laser-engraving a printing plate precursor and that can give a flexographic printing plate that is excellent in terms of non-tackiness, hardness, printing durability, and halftone shape, a flexographic printing plate precursor and a process for producing same using the resin composition for a laser-engravable flexographic printing plate, a process for making a flexographic printing plate using the printing plate precursor, and a flexographic printing plate obtained thereby.

The objects of the present invention have been attained by means described in <1> and <14> to <17> below. They are described together with <2> to <13>, <18>, and <19>, which are preferred embodiments.

<1> A resin composition for a laser-engravable flexographic printing plate, comprising (Component A) a polyurethane resin having a group represented by Formula (1), (Component B) an ethylenically unsaturated compound, and (Component C) a polymerization initiator

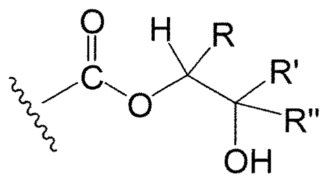

( 1 )

wherein in the Formula, R and R" independently denote a hydrogen atom or an alkyl group, R' denotes an alkyl group, R and R' may be linked to form a ring, and the wavy line portion denotes the position of bonding,
<2> the resin composition for a laser-engravable flexographic printing plate according to <1> above, wherein R and R" are hydrogen atoms and R' is an alkyl group,
<3> the resin composition for a laser-engravable flexographic printing plate according to <1> or <2> above, wherein R' is an alkyl group that is substituted with an alkoxy group,
<4> the resin composition for a laser-engravable flexographic printing plate according to any one of <1> to <3> above, wherein the group represented by Formula (1) is a group formed by reacting a carboxyl group and an epoxy group,
<5> the resin composition for a laser-engravable flexographic printing plate according to any one of <1> to <4> above, wherein the resin composition further comprises (Component D) a carbonate bond-containing polyurethane resin,
<6> the resin composition for a laser-engravable flexographic printing plate according to <5> above, wherein Component A and Component D are both resins having a number-average molecular weight of 1,000 to 50,000,
<7> the resin composition for a laser-engravable flexographic printing plate according to <5> or <6> above, wherein Component A and Component D both have an ethylenically unsaturated group,
<8> the resin composition for a laser-engravable flexographic printing plate according to any one of <1> to <7> above, wherein Component C is a thermopolymerization initiator,

<9> the resin composition for a laser-engravable flexographic printing plate according to <8> above, wherein the thermopolymerization initiator is an organic peroxide,

<10> the resin composition for a laser-engravable flexographic printing plate according to any one of <1> to <9> above, wherein the resin composition further comprises (Component E) a photothermal conversion agent that can absorb light at wavelengths of 700 to 1,300 nm,

<11> the resin composition for a laser-engravable flexographic printing plate according to <10> above, wherein Component E is carbon black,

<12> the resin composition for a laser-engravable flexographic printing plate according to any one of <1> to <11> above, wherein the resin composition further comprises (Component F) a hydrolyzable silyl group- and/or silanol group-containing organosilicon compound,

<13> the resin composition for a laser-engravable flexographic printing plate according to <12> above, wherein Component F is an oxyalkylene group-containing organosilicon compound,

<14> a laser-engravable flexographic printing plate precursor comprising a crosslinked relief-forming layer formed by crosslinking a relief-forming layer comprising the resin composition for a laser-engravable flexographic printing plate according to any one of <1> to <13> above,

<15> a process for producing a laser-engravable flexographic printing plate precursor, comprising a layer formation step of forming a relief-forming layer comprising the resin composition for a laser-engravable flexographic printing plate according to any one of <1> to <13> above, and a crosslinking step of crosslinking the relief-forming layer to thus obtain a flexographic printing plate precursor comprising a crosslinked relief-forming layer,

<16> a process for making a flexographic printing plate, comprising an engraving step of laser-engraving the crosslinked relief-forming layer of the laser-engravable flexographic printing plate precursor according to <14> above to thus form a relief layer,

<17> a flexographic printing plate comprising a relief layer made by the process for making a flexographic printing plate according to <16> above,

<18> the flexographic printing plate according to <17> above, wherein the relief layer has a thickness of at least 0.05 mm but no greater than 10 mm, and

<19> the flexographic printing plate according to <17> or <18> above, wherein the relief layer has a Shore A hardness of at least 50° but no greater than 90°.

In accordance with the present invention, there can be provided a resin composition for a laser-engravable flexographic printing plate that has excellent removability for engraving residue generated when laser-engraving a printing plate precursor and that can give a flexographic printing plate that is excellent in terms of non-tackiness, hardness, printing durability, and halftone shape, a flexographic printing plate precursor and a process for producing same using the resin composition for a laser-engravable flexographic printing plate, a process for making a flexographic printing plate using the printing plate precursor, and a flexographic printing plate obtained thereby.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, they are numerical ranges that include the upper limit and the lower limit.

Furthermore, '(Component A) a polyurethane resin having a group represented by Formula (1)' etc. are also simply called 'Component A' etc.

Furthermore, in the present invention, 'mass%' is used for the same meaning as 'weight%', and 'parts by mass' is used for the same meaning as 'parts by weight'.

In the present invention, '(meth)acrylate' means any one or both of 'acrylate' and 'methacrylate'.

Hereinafter, the present invention will be described in detail.

(Resin composition for laser-engravable flexographic printing plate)

The resin composition for a laser-engravable flexographic printing plate (hereinafter, also simply called a 'resin composition for laser engraving' or a 'resin composition') of the present invention comprises (Component A) a polyurethane resin having a group represented by Formula (1), (Component B) an ethylenically unsaturated compound, and (Component C) a polymerization initiator.

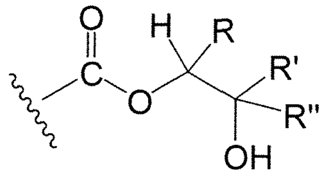

(1)

In the Formula, R and R'' independently denote a hydrogen atom or an alkyl group, R' denotes an alkyl group, R and R' may be linked to form a ring, and the wavy line portion denotes the position of bonding.

The resin composition for laser engraving of the present invention may be applied to a wide range of uses where it is subjected to laser engraving, other than use as a relief-forming layer of a flexographic printing plate precursor, without particular limitations. For example, it may be applied not only to a relief-forming layer of a printing plate precursor where formation of a raised relief is carried out by laser engraving, which is explained in detail below, but also to the formation of various types of printing plates or various types of moldings in which image formation is carried out by laser engraving, such as another material form having asperities or openings formed on the surface such as for example an intaglio printing plate, a stencil printing plate, or a stamp.

Among them, the application thereof to the formation of a relief-forming layer provided on an appropriate support is a preferred embodiment.

In the present specification, with respect to explanation of the flexographic printing plate precursor, a non-crosslinked crosslinkable layer comprising a binder polymer and having a flat surface as an image formation layer that is subjected to laser engraving is called a relief-forming layer, a layer that is formed by crosslinking the relief-forming layer is called a crosslinked relief-forming layer, and a layer that is formed by subjecting this to laser engraving so as to form asperities on the surface is called a relief layer.

Constituent components of the resin composition for laser engraving are explained below.

<(Component A) Polyurethane resin having group represented by Formula (1)>

The resin composition for laser engraving of the present invention comprises (Component A) a polyurethane resin having a group represented by Formula (1).

The polyurethane resin having a group represented by Formula (1) (Component A) is explained in detail below.

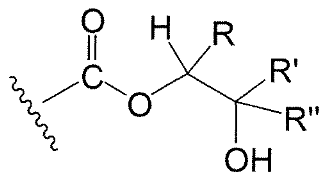

(1)

In the Formula, R and R'' independently denote a hydrogen atom or an alkyl group, R' denotes an alkyl group, R and R' may be linked to form a ring, and the wavy line portion denotes the position of bonding.

Component A may have a group represented by Formula (1) at any position of a polyurethane resin, and although there are no particular restrictions a polyurethane resin having in a side chain a group represented by Formula (1) is preferable.

In the present invention, a 'main chain' means the longest bonded chain in a molecule of a macromolecular compound forming an oligomer or polymer, and a 'side chain' means a carbon chain branching from the main chain.

The group represented by Formula (1) is preferably a group formed by reacting a carboxyl group and an epoxy group.

It is surmised that in the present invention, due to the use of the resin composition for a laser-engravable flexographic printing plate of the present invention, film physical properties (tan $\delta$ at room temperature) of the plate can be appropriately controlled, and performance aspects such as non-tackiness are improved. More specifically, it is surmised that by introducing a group represented by Formula (1) into a polyurethane resin the Tg of a plate comprising a conventional polyurethane resin can be reduced, and as a result the tan $\delta$ at room temperature can be reduced, and tackiness can also be reduced. 'Being excellent in terms of non-tackiness' means the plate surface having little stickiness. It is surmised that by introducing a group represented by Formula (1), flexibility is imparted to the polyurethane resin (hereinafter, the group represented by Formula (1) is also called a 'flexibility group'). The tan $\delta$ is defined as the value obtained by dividing the loss modulus by the storage modulus.

In a method for introducing a flexibility group into the polyurethane resin used in the present invention, by reacting a carboxyl group-containing polyurethane resin with a compound having a flexibility group and a functional

group that reacts with a carboxyl group, synthesis can be carried out without removing the synthesized polyurethane from a reaction vessel.

The number-average molecular weight of Component A is preferably 800 to 3,000,000, more preferably 800 to 500,000, yet more preferably 1,000 to 100,000, and particularly preferably 1,000 to 50,000.

The number-average molecular weight may be measured using a GPC (gel permeation chromatograph) method and determined using a reference polystyrene calibration curve.

In Formula (1), R is preferably a hydrogen atom or an alkyl group having 1 to 20 carbons, which may have a straight-chain, branched, or alicyclic structure and may be substituted. Examples of the substituent include a halogen atom, an alkoxy group, an aryl group, and an aryloxy group. Among them, R is preferably a hydrogen atom.

In Formula (1), R' is preferably an alkyl group having 1 to 30 carbons, which may have a straight-chain, branched, or alicyclic structure and may be substituted. Examples of the substituent include a halogen atom, an optionally substituted silyl group, an alkoxy group, an aryl group, and an aryloxy group, and examples of the substituent of the silyl group include a halogen atom and an alkyl group or alkoxy group having 1 to 6 carbons. The alkyl group having 1 to 30 carbons is preferably a carbon chain containing at least one of ether bond, ester bond, amide bond, or urethane bond in the interior of the carbon chain. Among them, R' is preferably (a) a lower alkyl group having 1 to 6 carbons substituted with an ether bond-containing alkoxy group having 1 to 10 carbons or (b) an unsubstituted or halogen-substituted alkyl group having 4 to 20 carbons, and more preferably (a) above.

Preferred examples of R' include a methyl group, an allyloxymethyl group, an *n*-butoxymethyl group, a 4-glycidyloxybutoxymethyl group, a 4-*tert*-butylbenzoyloxymethyl group, a *tert*-butoxymethyl group, a benzyloxymethyl group, an *n*-decyl group, a 3-diethoxymethylsilylpropyloxymethyl group, an *n*-hexyl group, a 2-ethylhexyloxymethyl group, an *n*-octadecyl group, an *n*-pentyl group, an *n*-hexadecyl group, an *n*-dodecyl group, an *n*-octyl group, an *n*-tetradecyl group, a 3-pentenyl group, a 7-octenyl group, an *n*-butyl group, a perfluorooctylmethyl group, an ethoxymethyl group, an *n*-propyl group, a phenoxymethyl group, a methoxymethyl group, a butyroyloxymethyl group, a 2-perfluorohexylethoxymethyl group, and a 2-p-chlorophenylethyl group. Among them, a *tert*-butoxymethyl group, a 2-ethylhexyloxymethyl group, an *n*-octadecyl group, an *n*-dodecyl group, a perfluorooctylmethyl group, and a butyroyloxymethyl group are more preferable, and a 2-ethylhexyloxymethyl group and an *n*-dodecyl group are particularly preferable.

In Formula (1), R" is preferably a hydrogen atom or an alkyl group having 1 to 20 carbons, which may have a straight-chain, branched, or alicyclic structure and may be substituted. Examples of the substituent include a halogen atom, an alkoxy group, an aryl group, and an aryloxy group. Among them, it is more preferably a hydrogen atom or a methyl group.

Furthermore, R and R' may be linked to form a ring; the ring formed by R and R' being linked is preferably a 5- to 12-membered aliphatic ring, the ring structure may comprise a heteroatom such as an oxygen atom, a nitrogen atom, or a sulfur atom, and the aliphatic ring may be substituted with a halogen atom, an alkyl group, or an alkoxy group. Moreover, the aliphatic ring may be a monocyclic ring or a di- or higher cyclic ring such as a bridged ring or a spiro ring, and may be a saturated aliphatic ring or an unsaturated aliphatic ring.

Preferred examples of the ring formed by R and R' being linked include aliphatic rings such as a cyclopentane ring, a cyclohexane ring, a cyclooctane ring, and a cyclododecane ring, norbornane, and an isopinocamphone ring.

Specific examples of the group represented by Formula (1) are now illustrated. The wavy line portion denotes the position of bonding.

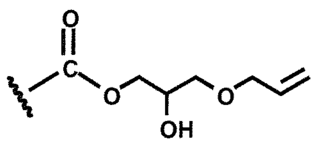

(1)-1

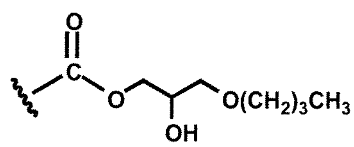

(1)-2

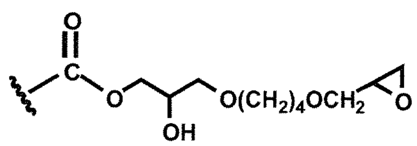

(1)-3

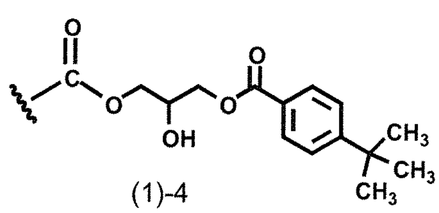

(1)-4

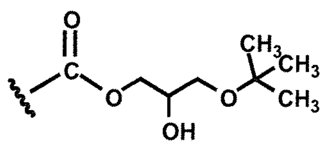

(1)-5

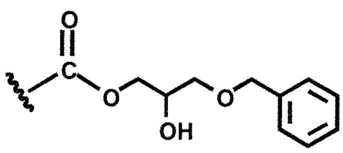

(1)-6

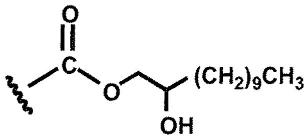
(1)-7

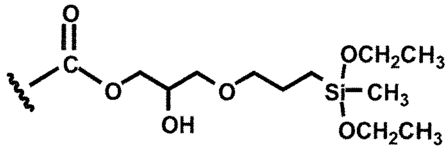
(1)-8

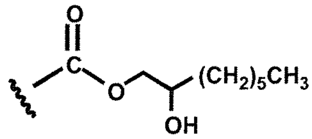
(1)-9

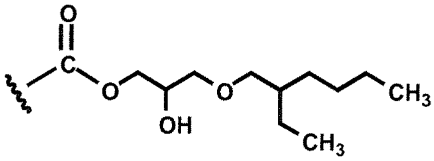
(1)-10

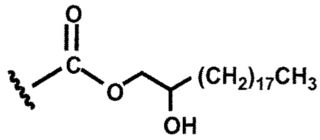
(1)-11

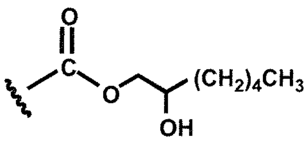
(1)-12

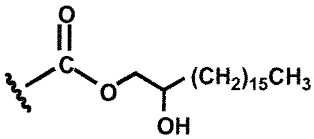
(1)-13

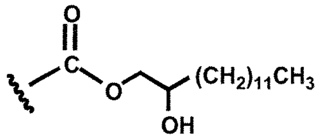
(1)-14

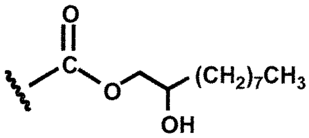
(1)-15

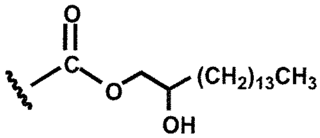
(1)-16

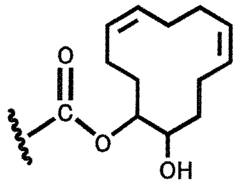
(1)-17

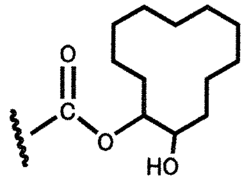
(1)-18

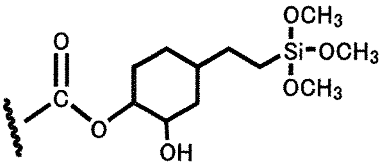
(1)-19

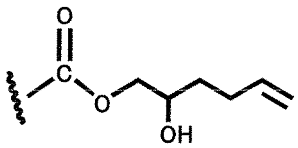
(1)-20

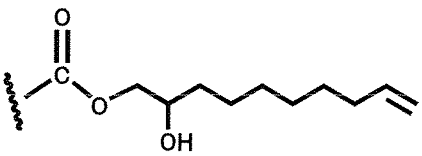
(1)-21

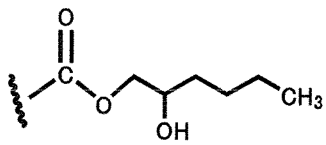
(1)-22

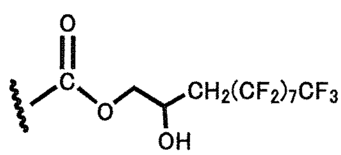
(1)-23

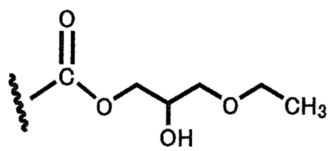
(1)-24

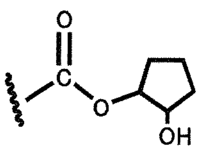
(1)-25

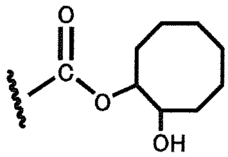

(1)-26

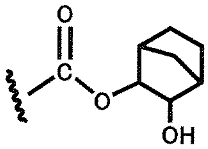

(1)-27

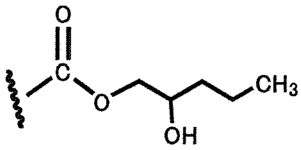

(1)-28

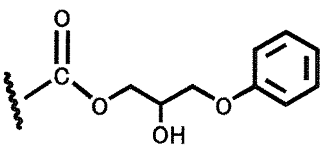

(1)-29

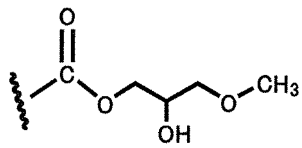

(1)-30

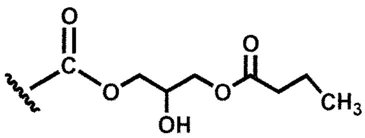

(1)-31

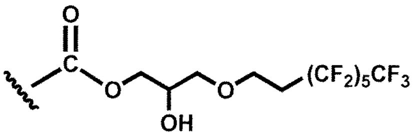

(1)-32

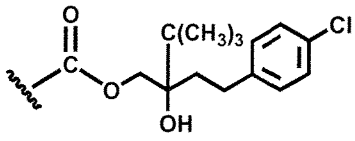

(1)-33

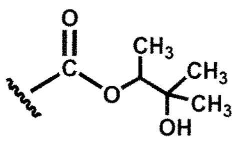

(1)-34

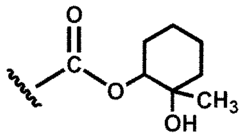

(1)-35

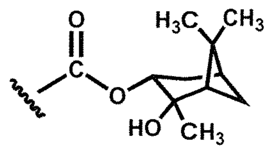

(1)-36

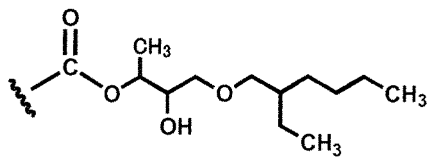

(1)-37

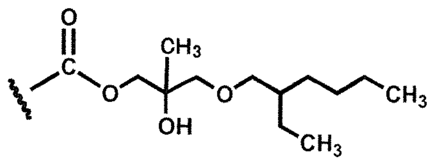

(1)-38

With regard to a method for obtaining Component A, a method for obtaining a polyurethane resin, which is the basic skeleton, is first explained, and a method for introducing a group represented by Formula (1) into a polyurethane resin skeleton is then explained.

The basic skeleton of Component A is preferably a polyurethane resin that is the product of a reaction between at least one type of diisocyanate compound represented by Formula (2) below and at least one type of diol compound represented by Formula (3) below. For obtaining the basic skeleton of Component A, a synthetic method employing a known polyaddition reaction may be used for obtaining the polyurethane resin. Examples include synthetic methods described in Examples 1 to 7 of JP-A-2011-136430.

$$OCN\text{-}X^0\text{-}NCO \qquad (2)$$

$$HO\text{-}Y^0\text{-}OH \qquad (2)$$

In Formula (2) and Formula (3), $X^0$ and $Y^0$ independently denote a divalent organic group.

Examples of $X^0$ and $Y^0$ independently include a divalent hydrocarbon group such as an optionally substituted alkylene group, an optionally substituted arylene group, or a group formed by combining two or more thereof, and a group in which two or more hydrocarbon groups are bonded via a linking group.

Examples of the linking group include a divalent linking group selected from the group consisting of an ether

bond, a urethane bond, a sulfide bond, a sulfoxide group, a sulfonyl group, a carbonyl group, and an optionally substituted amino group.

Examples of the substituent include an alkyl group, an aryl group, a halogen atom, a cyano group, a nitro group, a sulfo group, a heterocyclic group, an alkoxy group, a carboxyl group, a sulfide group, an acyl group, an acyloxy group, an alkoxycarbonyl group, an amide group, and a carbamoyl group.

Among them, $X^0$ and $Y^0$ are independently preferably an optionally substituted hydrocarbon group.

The group represented by Formula (1) is preferably a group formed by reacting a carboxyl group and an epoxy group.

Examples of a method for introducing into Component A a group of Formula (1) include a method in which a polyurethane resin is formed by a polyaddition reaction of a diisocyanate compound or diol compound having a group of Formula (1) as a starting material for the polyurethane resin, and a method involving a polymer reaction in which after a carboxyl group-containing polyurethane resin is obtained, an epoxy group is reacted with the carboxyl group.

Among them, a method in which after the carboxyl group of a carboxyl group-containing diol compound is reacted with an epoxy group-containing compound, it is subjected to a polyaddition reaction with a diisocyanate compound to thus obtain a polyurethane resin, and a method involving a polymer reaction in which an epoxy group-containing compound is reacted with a carboxyl group of a polyurethane resin obtained by a polyaddition reaction between a carboxyl group-containing diol compound and a diisocyanate compound are more preferable.

The reaction between a carboxyl group and an epoxy group may employ a known method, and preferred examples include a synthetic method described in Industrial and Engineering Chemistry, 1956, 48 (1) pp 86-93.

The carboxyl group-containing diol compound, diisocyanate compound, and epoxy group-containing compound are explained below. Carboxyl group-containing diol compound

As a starting material for obtaining Component A used in the laser-engravable resin composition of the present invention, a carboxyl group-containing diol compound is preferably used. It is a compound containing a carboxyl group as the $Y^0$ moiety of a diol compound of Formula (3).

Preferred examples of the carboxyl group-containing diol compound (hereinafter, also called a carboxyl group-containing diol) include those shown by Formulae (17) to (19) below.

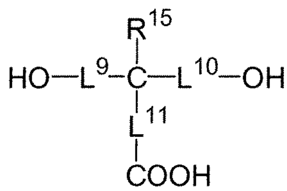

( 17 )

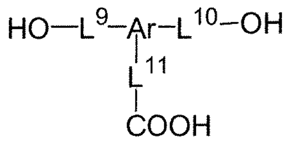

( 18 )

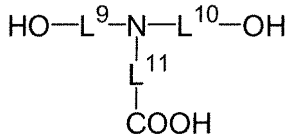

( 19 )

In Formulae (17) to (19), $R^{15}$ denotes a hydrogen atom, an alkyl group, which may have a substituent (e.g. a cyano group, a nitro group, a halogen atom such as -F, -Cl, -Br, or -I, $-CONH_2$, $-COOR^{16}$, $-OR^{16}$, $-NHCONHR^{16}$, $-NHCOOR^{16}$, $-NHCOR^{16}$, or $-OCONHR^{16}$ (here, $R^{16}$ denotes an alkyl group having 1 to 10 carbons or an aralkyl group having 7 to 15 carbons)), an aralkyl group, an aryl group, an alkoxy group, or an aryloxy group, and preferably denotes a hydrogen atom, an alkyl group having 1 to 8 carbons, or an aryl group having 6 to 15 carbons. $L^9$, $L^{10}$, and $L^{11}$ may be identical to or different from each other and denote a single bond or a divalent aliphatic or aromatic hydrocarbon group, which may have a substituent (e.g. preferably an alkyl, aralkyl, aryl, alkoxy, or halogeno group), preferably denote an alkylene group having 1 to 20 carbons or an arylene group having 6 to 15 carbons, and more preferably an alkylene group having 1 to 8 carbons. Furthermore, as necessary, $L^9$ to $L^{11}$ may comprise another functional group or structure that does not react with an isocyanate group, examples thereof including carbonyl, ester, urethane, amide, ureido, and ether bonds. Of $R^{15}$, $L^9$, $L^{10}$, and $L^{11}$, two or three thereof may form a ring. Furthermore, $L^{11}$ is particularly preferably a

methylene group.

In Formula (18), Ar denotes an optionally substituted trivalent aromatic hydrocarbon group, and preferably an aromatic group having 6 to 15 carbons.

Specific examples of the carboxyl group-containing diol compound represented by Formulae (17) to (19) include 3,5-dihydroxybenzoic acid, 2,2-bis(hydroxymethyl)propionic acid, 2,2-bis(2-hydroxyethyl)propionic acid, 2,2-bis(3-hydroxypropyl)propionic acid, bis(hydroxymethyl)acetic acid, bis(4-hydroxyphenyl)acetic acid, 2,2-bis(hydroxymethyl)butyric acid, 4,4-bis(4-hydroxyphenyl)pentanoic acid, tartaric acid, *N,N*-dihydroxyethylglycine, *N,N*-bis(2-hydroxyethyl)-3-carboxypropionamide, and N,N-bis(hydroxymethyl)-3-carboxypropionamide.

Furthermore, in the synthesis of Component A, a compound formed by opening a tetracarboxylic dianhydride represented by Formulae (20) to (22) below using a diol compound may additionally be used.

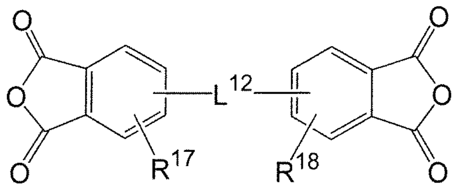

( 20 )

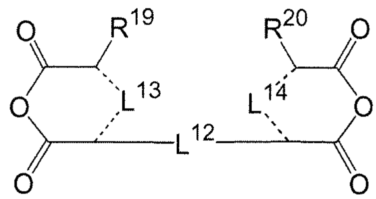

( 21 )

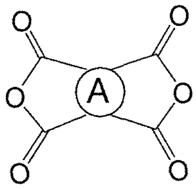

( 22 )

In Formulae (20) to (22), $L^{12}$ denotes a single bond, a divalent aliphatic or aromatic hydrocarbon group, which may have a substituent (e.g. preferably alkyl, aralkyl, aryl, alkoxy, halogeno, ester, or amide), -CO-, -SO-, $-SO_2-$, -O-, or -S-, and preferably denotes a single bond, a divalent aliphatic hydrocarbon group having 1 to 15 carbons, -CO-, $-SO_2-$ -O-, or -S-. $R^{17}$ and $R^{18}$ may be identical to or different from each other and each denote a hydrogen atom, an alkyl group, an aralkyl group, an aryl group, an alkoxy group, or a halogeno group, and preferably a hydrogen atom, an alkyl group having 1 to 8 carbons, an aryl group having 6 to 15 carbons, an alkoxy group having 1 to 8 carbons, or a halogeno group. Of $L^{12}$, $R^{17}$, and $R^{18}$, two may be bonded to form a ring. $R^{19}$ and $R^{20}$ may be identical to or different from each other and each denote a hydrogen atom, an alkyl group, an aralkyl group, an aryl group, or a halogeno group, and preferably a hydrogen atom, an alkyl group having 1 to 8 carbons, or an aryl group having 6 to 15 carbons. Of $L^{12}$, $R^{19}$, and $R^{20}$, two may be bonded to form a ring. $L^{13}$ and $L^{14}$ may be identical to or different from each other and each denote a single bond, a double bond, or a divalent aliphatic hydrocarbon group, and preferably a single bond, a double bond, or a methylene group. A denotes a mononuclear or polynuclear aromatic ring, and preferably an aromatic ring having 6 to 18 carbons.

Specific examples of the compound represented by Formula (20), (21), or (22) above include aromatic tetracarboxylic dianhydrides such as pyromellitic dianhydride, 3,3',4,4'-benzophenonetetracarboxylic dianhydride, 3,3',4,4'-diphenyltetracarboxylic dianhydride, 2,3,6,7-naphthalenetetracarboxylic dianhydride, 1,4,5,8-naphthalenetetracarboxylic dianhydride, 4,4'-sulfonyldiphthalic dianhydride, 2,2-bis(3,4-dicarboxyphenyl)propane dianhydride, bis(3,4-dicarboxyphenyl) ether dianhydride, 4,4'-[3,3'-(alkylphosphoryldiphenylene)-bis(iminocarbonyl)] diphthalic dianhydride, an adduct of hydroquinone diacetate and trimellitic anhydride, and an adduct of diacetyldiamine and trimellitic anhydride; alicyclic tetracarboxylic dianhydrides such as 5-(2,5-dioxotetrahydrofuryl)-3-methyl-3-cyclohexene-1,2-dicarboxylic anhydride (Epiclon B-4400, DIC), 1,2,3,4-cyclopentanetetracarboxylic dianhydride, 1,2,4,5-cyclohexanetetracarboxylic dianhydride, and tetrahydrofurantetracarboxylic dianhydride; and aliphatic tetracarboxylic dianhydrides such as 1,2,3,4-butanetetracarboxylic dianhydride and 1,2,4,5-pentanetetracarboxylic dianhydride.

As a method for introducing into a polyurethane resin a compound formed by ring-opening a tetracarboxylic dianhydride using a diol compound, for example, there are the following methods.

a) A method in which a diisocyanate compound is reacted with a compound having an alcohol terminal obtained by ring-opening a tetracarboxylic dianhydride using a diol compound.
b) A method in which a tetracarboxylic dianhydride is reacted with a urethane compound having an alcohol terminal obtained by a reaction between a diisocyanate compound and an excess amount of a diol compound.

Specific examples of the diol compound used in the ring-opening reaction include ethylene glycol, diethylene glycol, triethylene glycol, tetraethylene glycol, propylene glycol, dipropylene glycol, polyethylene glycol, polypropylene glycol, neopentyl glycol, 1,3-butylene glycol, 1,6-hexanediol, 2-butene-1,4-diol, 2,2,4-trimethyl-1,3-pentanediol, 1,4-bis-β-hydroxyethoxycyclohexane, cyclohexanedimethanol, tricyclodecanedimethanol, hydrogenated bisphenol A, hydrogenated bisphenol F, bisphenol A ethylene oxide adduct, bisphenol A propylene oxide adduct, bisphenol F ethylene oxide adduct, bisphenol F propylene oxide adduct, hydrogenated bisphenol A ethylene oxide adduct, hydrogenated bisphenol A propylene oxide adduct, hydroquinone dihydroxyethyl ether, p-xylylene glycol, dihydroxyethylsulfone, bis(2-hydroxyethyl)-2,4-tolylene dicarbamate, 2,4-tolylene bis(2-hydroxyethylcarbamide), bis(2-hydroxyethyl)-*m*-xylylene dicarbamate, and bis(2-hydroxyethyl)isophthalate.

Specific preferred examples of the carboxyl group-containing diol compound are shown below.

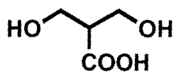
1

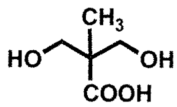
2

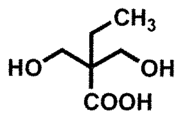
3

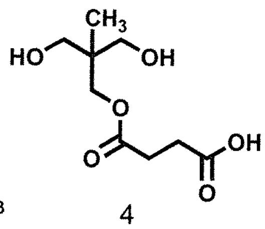
4

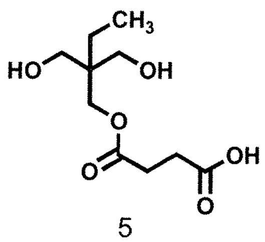
5

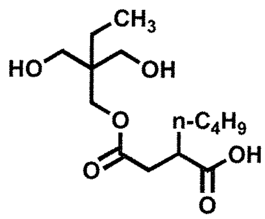
6

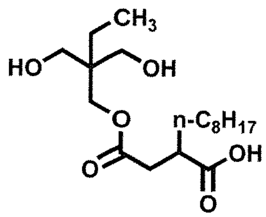
7

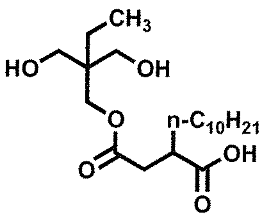
8

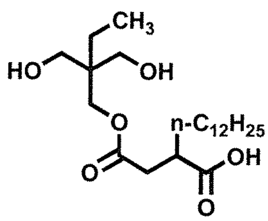
9

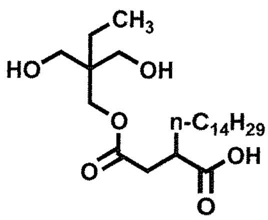
10

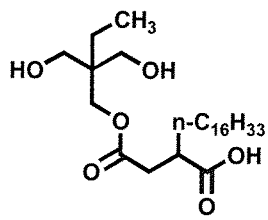
11

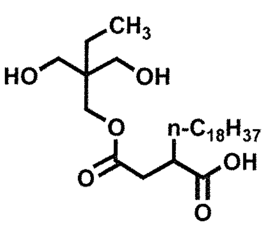
12

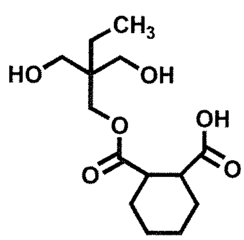
13

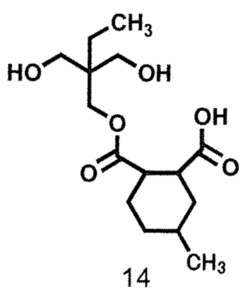
14

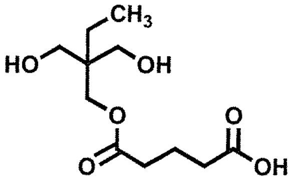

15

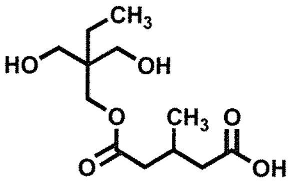

16

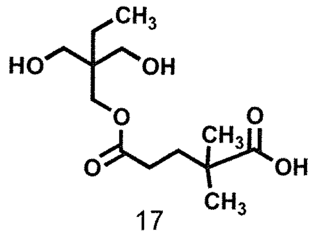

17

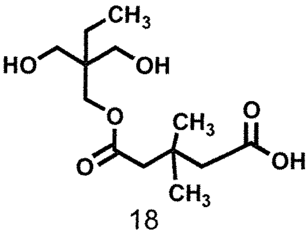

18

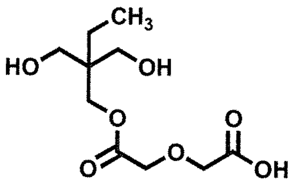

19

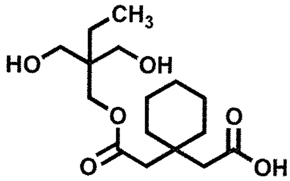

20

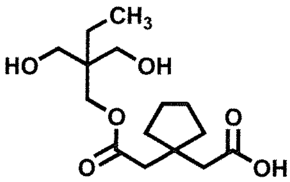

21

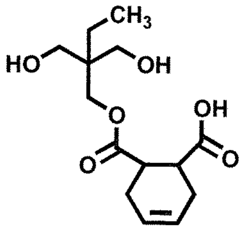

22

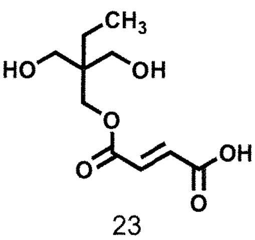

23

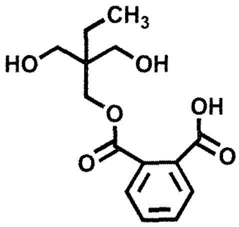

24

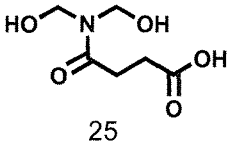

25

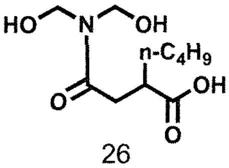

26

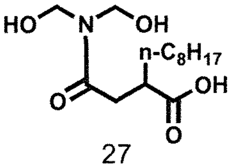

27

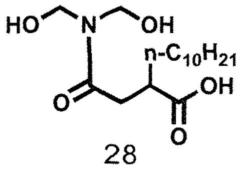

28

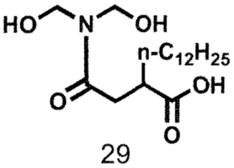

29

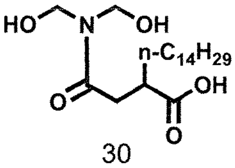

30

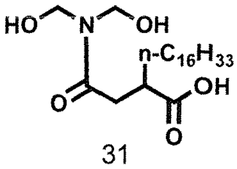

31

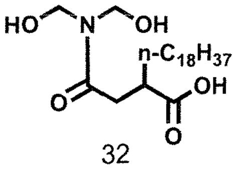

32

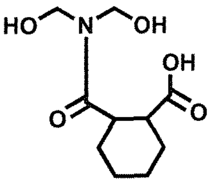

33

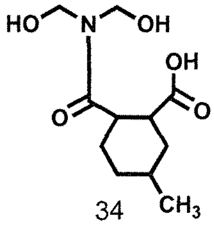

34

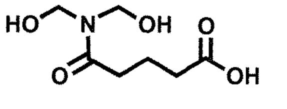

35

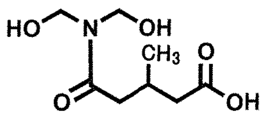
36

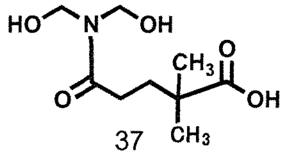
37

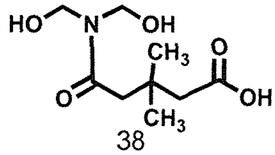
38

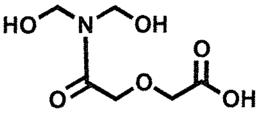
39

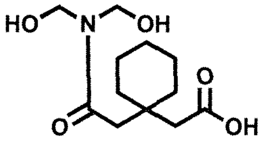
40

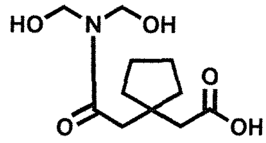
41

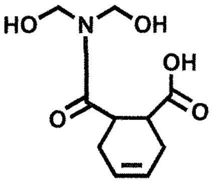
42

Diisocyanate compound

In the present invention, the diisocyanate compound represented by Formula (2) used in synthesis of Component A used in the present invention is now explained.

In Formula (2) above, $X^0$ preferably denotes an optionally substituted divalent aliphatic or aromatic hydrocarbon group. As necessary, $X^0$ may have a functional group that does not react with an isocyanate group, such as for example an ester bond, a urethane bond, an amide bond, or a ureido group.

Examples of the diisocyanate compound include an aliphatic diisocyanate compound, an alicyclic diisocyanate compound, an aromatic-aliphatic diisocyanate compound, and an aromatic diisocyanate compound.

Examples of the aliphatic diisocyanate compound include 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanate methyl caproate, and lysine diisocyanate.

Examples of the alicyclic diisocyanate compound include 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatomethyl)cyclohexane, 1,4-bis(isocyanatomethyl)cyclohexane, isophorone diisocyanate, and norbornane diisocyanate.

Examples of the aromatic-aliphatic diisocyanate compound include 1,3-xylene diisocyanate, 1,4-xylene diisocyanate, ω,ω'-diisocyanato-1,4-diethylbenzene, 1,3-bis(1-isocyanato-1-methylethyl)benzene, 1,4-bis(1-isocyanato-1-methylethyl)benzene, and 1,3-bis(α,α-dimethylisocyanatomethyl)benzene.

Examples of the aromatic diisocyanate compound include *m*-phenylene diisocyanate, p-phenylene diisocyanate, 2,4-tolylene diisocyanate, 2,6-tolylene diisocyanate, 1,4-naphthylene diisocyanate, 1,5-naphthylene diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, 2,2-bis(*p*-isocyanatophenyl)propane, and 3,3'-dimethoxydiphenyl-4,4'-diisocyanate. Among them, 2,4-tolylene diisocyanate is particularly preferable.

Among them, 1,6-hexamethylene diisocyanate, 1,3-bis(isocyanatomethyl)cyclohexane, isophorone diisocyanate, 4,4'-methylene bis(cyclohexylisocyanate), and 2,4-tolylene diisocyanate are particularly preferable.

Epoxy group-containing compound

The epoxy group-containing compound that is preferably used for introducing a group represented by Formula

(1) of Component A used in the laser-engravable resin composition of the present invention is now explained.

The epoxy group-containing compound is preferably a compound represented by Formula (1-A) below.

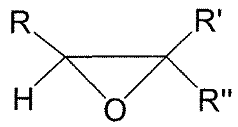
( 1 - A )

In the Formula, R and R" independently denote a hydrogen atom or an alkyl group, R' denotes an alkyl group, and R and R' may be linked to form a ring.

R, R', and R" in Formula (1-A) have the same meanings as those of R, R', and R" in Formula (1), and preferred embodiments are also the same.

Specific examples of the epoxy group-containing compound represented by Formula (1-A) are illustrated below.

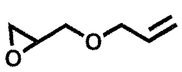
(1)-1A

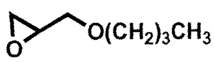
(1)-2A

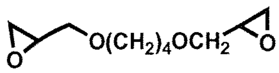
(1)-3A

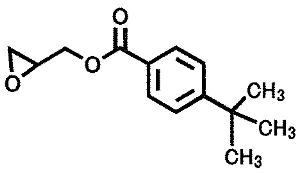
(1)-4A

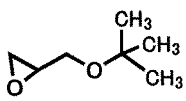
(1)-5A

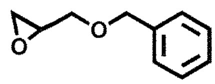
(1)-6A

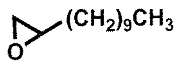
(1)-7A

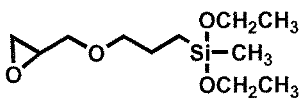
(1)-8A

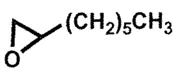
(1)-9A

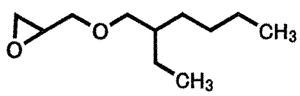
(1)-10A

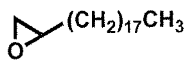
(1)-11A

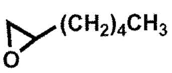
(1)-12A

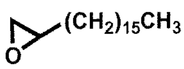
(1)-13A

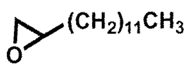
(1)-14A

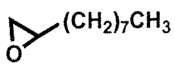
(1)-15A

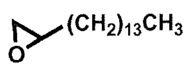
(1)-16A

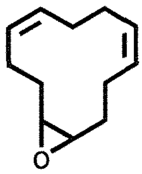
(1)-17A

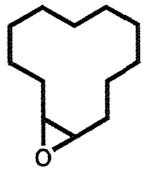
(1)-18A

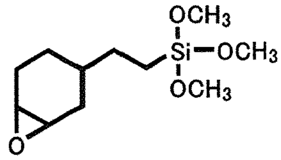
(1)-19A

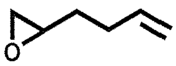
(1)-20A

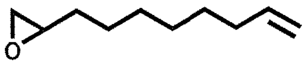
(1)-21A

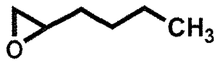
(1)-22A

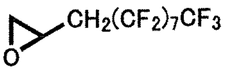
(1)-23A

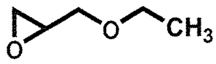
(1)-24A

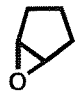
(1)-25A

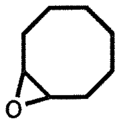
(1)-26A

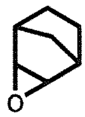
(1)-27A

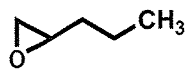
(1)-28A

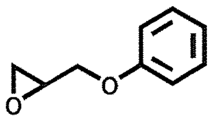
(1)-29A

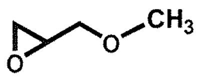
(1)-30A

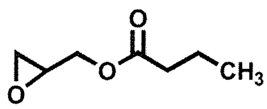
(1)-31A

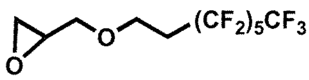
(1)-32A

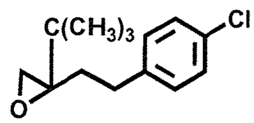
(1)-33A

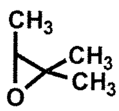
(1)-34A

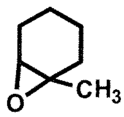
(1)-35A

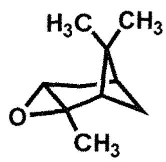
(1)-36A

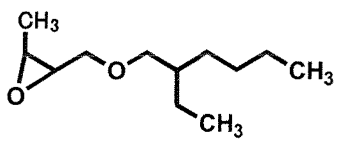
(1)-37A

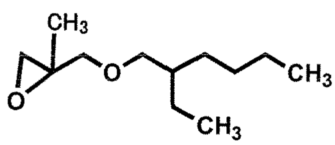
(1)-38A

Component A used in the laser-engravable resin composition of the present invention preferably comprises an ethylenically unsaturated group at a terminal of the polyurethane resin skeleton (polymer main chain).

The ethylenically unsaturated group at an end of the main chain may be present at one end only, but the polyurethane resin preferably has the ethylenically unsaturated group at both ends of the main chain.

Examples of the ethylenically unsaturated group include a group with an unsaturated carboxylic acid as a starting material, such as an acryloyl group, a methacryloyl group, an acrylamide group, a methacrylamide group, or a phthalimide group, and a radically polymerizable group such as a styryl group, a vinyl group, or an allyl group. Among them, an acryloyl group and a methacryloyl group are preferable.

An ethylenically unsaturated group can be introduced into an end of the main chain of Component A by, in the polyaddition reaction used for the synthesis of Component A, allowing a hydroxyl group or an isocyanate group to remain at an end of the main chain of the polyurethane resin obtained, and causing the polyurethane resin to react with a compound having a functional group which is reactive with the hydroxyl group or isocyanate group, and an ethylenically unsaturated group. The compound having such functional group is more preferably a compound having an isocyanate group for a terminal hydroxyl group, or a compound having a hydroxyl group for a terminal isocyanate group.

The polyurethane resin as the main chain moiety of Component A is preferably formed by subjecting to a polyaddition reaction at least one type of diol compound of Formula (3) and at least one type of diisocyanate compound of Formula (2). By the use of an excess amount of diol compound added relative to the amount of diisocyanate compound added, the polyurethane resin that is obtained comprises a hydroxy group at a main chain terminal. This hydroxy group is further reacted with an ethylenically unsaturated group-containing isocyanate compound represented by Formula (2-e) below to thus form a urethane bond, thereby making it possible for an ethylenically unsaturated group to be introduced into a terminal of the main chain of Component A.

On the other hand, in a polyaddition reaction an isocyanate group remaining at a terminal of a polyurethane resin obtained by adding an excess amount of diisocyanate compound to a diol compound is further reacted with the hydroxy group of an ethylenically unsaturated group- and hydroxy group-containing compound represented by Formula (2-f) below to thus form a urethane bond, and it is thereby possible to introduce an ethylenically unsaturated group to the terminal of the main chain of Component A.

Compounds represented by Formula (2-e) and Formula (2-f) are explained below.

The ethylenically unsaturated group-containing isocyanate compound is preferably a compound represented by Formula (2-e).

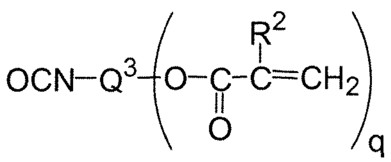

(2 - e)

In Formula (2-e), $R^2$ denotes a hydrogen atom or a methyl group. $Q^3$ denotes a divalent or trivalent organic residue and denotes a straight-chain, branched, or alicyclic hydrocarbon group having 1 to 10 carbons or an aromatic group having 6 to 20 carbons, and q is 1 or 2. When q is 1, $Q^3$ is preferably an alkylene group having 1 to 4 carbons, and more preferably an ethylene group. When q is 2, $Q^3$ is preferably a trivalent branched hydrocarbon group having 3 to 6 carbons, and more preferably a trivalent branched hydrocarbon group having 4 carbons.

Compounds represented by Formula (2-e) are commercially available: there are 2-methacryloyloxyethyl isocyanate (Karenz MOI (registered trademark)), 2-acryloyloxyethyl isocyanate (Karenz AOI (registered trademark)), and 1,1-(bisacryloyloxymethyl)ethyl isocyanate (Karenz BEI (registered trademark)) (all manufactured by Showa Denko K.K.).

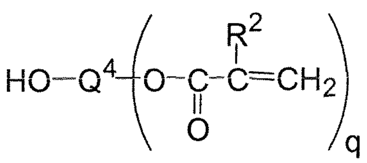

(2 - f)

In Formula (2-f), $R^2$ denotes a hydrogen atom or a methyl group. $Q^4$ denotes a divalent or trivalent organic residue and denotes a straight-chain, branched, or alicyclic hydrocarbon group having 1 to 10 carbons or an aromatic group having 6 to 20 carbons, and q is 1 or 2. When q is 1, $Q^4$ is preferably an alkylene group having 2 to 4 carbons, and more preferably an ethylene group or a propylene group. When q is 2, $Q^4$ is preferably a trivalent branched hydrocarbon group having 3 to 6 carbons, and more preferably a trivalent branched hydrocarbon group having 4 carbons.

Specific examples of the compound represented by Formula (2-f) include 2-hydroxyethyl acrylate, 2-hydroxyethyl methacrylate, 2-hydroxypropyl acrylate, and 2-hydroxypropyl methacrylate.

Component A may comprise, as a functional group in addition to a urethane bond, an organic group comprising at least one of an ether bond, an amide bond, a urea bond, an ester bond, a biuret bond, and an allophanate bond.

Preferred examples of Component A are preferably represented by the structural formula of Formula (A-1) or Formula (A-2) below.

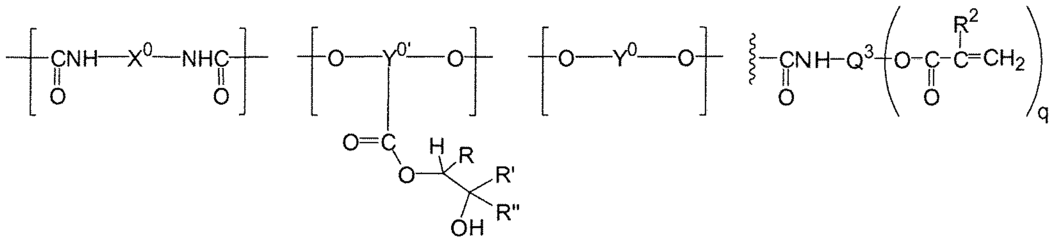

(A-1)

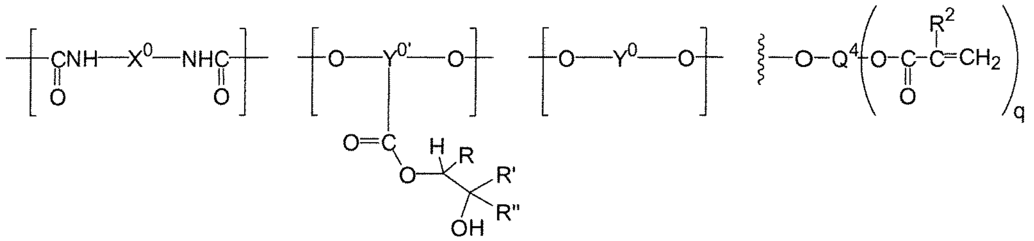

(A-2)

In Formula (A-1) and Formula (A-2), $X^0$ has the same meaning as that of $X^0$ in Formula (2), and preferred embodiments are also the same. $Y^0$ has the same meaning as that of $Y^0$ in Formula (3), and preferred embodiments are also the same. $Y^{0'}$ denotes a trivalent linking group comprising a group represented by Formula (1), which is an organic residue formed by removing the carboxyl group and two hydroxy groups of a carboxyl group-containing compound of Formula (17) to Formula (19). R, R', and R" have the same meanings as those of R, R', and R" in Formula (1), and preferred embodiments are also the same. $Q^3$, $R^2$, and q have the same meanings as those of $Q^3$, $R^2$, and q in Formula (2-e), and preferred embodiments are also the same. $Q^4$ has the same meaning as that of $Q^4$ in Formula (2-f), and preferred embodiments are also the same. The wavy line portion denotes a bond of a terminal part of Component A. Needless to say, $Y^0$ includes $Y^{0'}COOH$.

Furthermore, a polyurethane resin containing a group formed by reacting an isocyanate compound with some of the groups represented by Formula (1) in Formula (A-1) and Formula (A-2) can also cited as a preferred example of Component A.

The content of Component A in the laser-engravable resin composition of the present invention is preferably 2 to 95 mass% relative to the total mass of the solids content excluding volatile components such as solvent, more preferably 20 to 90 mass%, and yet more preferably 40 to 80 mass%.

It is preferable for the content of Component A to be within this range since a flexographic printing plate precursor obtained from the resin composition of the present invention is excellent in terms of non-tackiness, engraving residue removability, printing durability, etc.

<(Conponent B) Ethylenically unsaturated compound>

The resin composition for laser engraving of the present invention comprises (Component B) an ethylenically unsaturated compound (hereinafter, also called a 'Component B' as appropriate).

Component B is an organic compound that comprises at least one ethylenically unsaturated bond and can undergo an addition polymerization reaction by radical polymerization; it preferably comprises at least two ethylenically unsaturated bonds, and more preferably 2 to 6 ethylenically unsaturated bonds. Furthermore, Component B is preferably a compound having an ethylenically unsaturated group at a molecular terminal. Moreover, Component B preferably has a number-average molecular weight of less than 1,000. It is preferable for the monomer not to contain a urethane bond.

As Component B, a known monomer may be used without particular limitations, and those described in paragraphs 0098 to 0124 of JP-A-2009-204962 and those described in JP-A-2009-255510 can be cited as examples.

A monofunctional monomer having one ethylenically unsaturated bond in the molecule and a polyfunctional monomer having two or more of said bonds in the molecule, which are used as an ethylenically unsaturated compound (hereinafter, also called a 'monomer'), are explained below.

Examples of ethylenically unsaturated compounds include unsaturated carboxylic acids (such as acrylic acid, methacrylic acid, itaconic acid, crotonic acid, isocrotonic acid and maleic acid), and esters and amides thereof. Preferably

esters of an unsaturated carboxylic acid and an aliphatic polyhydric alcoholic compound, or amides of an unsaturated carboxylic acid and an aliphatic polyvalent amine compound are used. Moreover, addition reaction products of unsaturated carboxylic acid esters or amides having a nucleophilic substituent such as a hydroxyl group, an amino group, or a mercapto group with monofunctional or polyfunctional isocyanates or epoxies, and dehydrating condensation reaction products with a monofunctional or polyfunctional carboxylic acid, etc. are also used preferably. Moreover, addition reaction products of unsaturated carboxylic acid esters or amides having an electrophilic substituent such as an isocyanato group or an epoxy group with monofunctional or polyfunctional alcohols, amines, or tiols, and substitution reaction products of unsaturated carboxylic acid esters or amides having a leaving group such as a halogen group or a tosyloxy group with monofunctional or polyfunctional alcohols, amines, or tiols are also favorable. Moreover, as another example, the use of compounds obtained by replacing the unsaturated carboxylic acid with an unsaturated phosphonic acid, stylene, a vinyl ether compound or the like is also possible.

Furthermore, preferred examples of the monofunctional monomer used include (meth)acrylic acid derivatives such as methyl (meth)acrylate, ethyl (meth)acrylate, *n*-butyl (meth)acrylate, 2-ethylhexyl (meth)acrylate, 2-hydroxyethyl (meth)acrylate, butoxyethyl (meth)acrylate, carbitol (meth)acrylate, cyclohexyl (meth)acrylate, benzyl (meth)acrylate, *N*-methylol(meth)acrylamide, and epoxy (meth)acrylate, *N*-vinyl compounds such as *N*-vinylpyrrolidone and *N*-vinylcaprolactam, and allyl compounds such as allyl glycidyl ether, diallyl phthalate, and triallyl trimellitate.

Specific examples of polyfunctional monomers comprising an ester of an aliphatic polyhydric alcohol compound and an unsaturated carboxylic acid include acrylic acid esters such as ethylene glycol diacrylate, triethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, 1,6-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, and a polyester acrylate oligomer.

Examples of methacrylic acid esters include dimethylene glycol dimethacrylate, tetramethylene glycol dimethacrylate, trimethylene glycol dimethacrylate, triethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[p-(3-methacryloxy-2-hydroxypropoxy)phenyl]dimethylmethane, bis[p-(methacryloxyethoxy)phenyl]dimethylmethane, and tricyclodecanedimethanol dimethacrylate.

Examples of itaconic acid esters include ethylene glycol diitaconate, propylene glycol diitaconate, 1,3-butanediol diitaconate, 1,4-butanediol diitaconate, tetramethylene glycol diitaconate, pentaerythritol diitaconate, and sorbitol tetraitaconate.

Examples of crotonic acid esters include ethylene glycol dicrotonate, tetramethylene glycol dicrotonate, pentaerythritol dicrotonate, and sorbitol tetradicrotonate.

Examples of isocrotonic acid esters include ethylene glycol diisocrotonate, pentaerythritol diisocrotonate, and sorbitol tetraisocrotonate.

Examples of maleic acid esters include ethylene glycol dimaleate, triethylene glycol dimaleate, pentaerythritol dimaleate, and sorbitol tetramaleate.

As examples of other esters, aliphatic alcohol-based esters described in JP-B-46-27926 (JP-B denotes a Japanese examined patent application publication), JP-B-51-47334 and JP-A-57-196231, those having an aromatic skeleton described in JP-A-59-5240, JP-A-59-5241, and JP-A-2-226149, those having an amino group described in JP-A-1-165613, etc. may also be used preferably.

The above-mentioned ester monomers may be used singly or in combination of two or more kinds thereof.

Furthermore, specific examples of amide monomers including an amide of an aliphatic polyamine compound and an unsaturated carboxylic acid include methylenebisacrylamide, methylenebismethacrylamide, 1,6-hexamethylenebisacrylamide, 1,6-hexamethylenebismethacrylamide, diethylenetriaminetrisacrylamide, xylylenebisacrylamide, and xylylenebismethacrylamide.

Preferred examples of other amide-based monomers include those having a cyclohexylene structure described in JP-B-54-21726.

Furthermore, a urethane-based monomer produced by an addition reaction of an isocyanate and a hydroxy group is also suitable, and specific examples thereof include a vinylurethane compound comprising two or more polymerizable vinyl groups per molecule in which a hydroxy group-containing vinyl monomer represented by Formula (I) below is added to a polyisocyanate compound having two or more isocyanate groups per molecule described in JP-B-48-41708.

$$CH_2=C(R)COOCH_2CH(R')OH \qquad (I)$$

R and R' independently denote H or $CH_3$.

Furthermore, urethane acrylates described in JP-A-51-37193, JP-B-2-322 and JP-B-2-16765, urethane compounds having an ethylene oxide-based skeleton described in JP-B-58-49860, JP-B-56-17654, JP-B-62-39417 and JP-B-62-39418 are also preferable.

Furthermore, by use of monomers having an amino structure or a sulfide structure in the molecule described in JP-A-63-277653, JP-A-63-260909, and JP-A-1-105238, a resin composition for laser engraving which can have a very fast photosensitivity speed can be obtained.

Other examples of the polyfunctional ethylenically unsaturated compound include polyester acrylates such as those described in JP-A-48-64183, JP-B-49-43191, and JP-B-52-30490, and polyfunctional acrylates and methacrylates such as epoxy acrylates etc. formed by a reaction of an epoxy resin and (meth)acrylic acid. Examples also include specific unsaturated compounds described in JP-B-46-43946, JP-B-1-40337, and JP-B-1-40336, and vinylphosphonic acid-based compounds described in JP-A-2-25493. In some cases, perfluoroalkyl group-containing structures described in JP-A-61-22048 are suitably used. Moreover, those described as photocuring monomers or oligomers in the Journal of the Adhesion Society of Japan, Vol. 20, No. 7, pp. 300 to 308 (1984) may also be used.

As a monomer, in view of the photosensitivity speed, a structure having a large content of unsaturated groups per molecule is preferred and in many cases, a difunctional or higher functional compound is preferred. In order to increase the strength of the image area, that is, the cured film, a trifunctional or higher functional compound is preferred. Further, a combined use of compounds of different functional degree or different kind of polymerizable group (for example, an acrylic acid ester, a methacrylic acid ester, a styrene compound, and a vinyl ether compound) is an effective method for controlling both the sensitivity and the strength.

The content of Component A is preferably in the range of 3 to 60 mass%, and more preferably in the range of 5 to 40 mass%, relative to the total solid content weight of the resin composition for laser engraving. Further, Component B may be used singly or in combination of two or more kinds thereof.

<(Component C) Polymerization initiator>

The resin composition for laser engraving of the present invention comprises (Component C) a polymerization initiator.

As the polymerization initiator well-known examples among those known art may be used without particular limitations. Hereinafter, although the radical polymerization initiator which is a preferable polymerization initiator will be described, the present invention is not limited by this description.

Moreover, although the polymerization initiator may be a photopolymerization initiator or a thermopolymerization initiator (a thermal polymerization initiator), the polymerization initiator is preferably a thermopolymerization initiator.

In the present invention, preferable radical polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (l) azo compounds. Hereinafter, although specific examples of the (a) to (l) are cited, the present invention is not limited to these.

In the present invention, when applies to the relief-forming layer of the flexographic printing plate precursor, from the viewpoint of printing durability and making a favorable relief edge shape, (c) organic peroxides and (l) azo compounds are more preferable, and (c) organic peroxides are particularly preferable.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

Organic peroxides are explained in detail below.

Organic peroxides

The resin composition of the present invention preferably comprises organic peroxides as the thermopolymerization initiator.

With regard to the organic peroxides, one type may be used on its own, or two or more types may be used in combination.

It is preferable for an organic peroxide to have a 10-hour half-life temperature of at least 60°C, more preferably at least 80°C, and particularly preferably at least 100°C. Furthermore, it is preferable for it to have a 10-hour half-life temperature of no greater than 220°C, more preferably no greater than 200°C, and particularly preferably no greater than 180°C.

It is preferable for the 10-hour half-life temperature to be in the above-mentioned range since the resin composition obtains sufficient crosslink density.

The 10-hour half-life temperature is measured as described in paragraphs 0047 of JP-A-2011-136431.

The organic peroxide is preferably a dialkyl peroxide, a peroxyketal, a peroxyester, a diacyl peroxide, an alkyl hydroperoxide, a peroxydicarbonate, or a ketone peroxide, and more preferably an organic peroxide selected from the group consisting of a dialkyl peroxide, a peroxyketal, and a peroxyester.

Examples of the dialkyl peroxide include di-*tert*-butyl peroxide, di-*tert*-hexyl peroxide, *tert*-butylcumyl peroxide, dicumyl peroxide, $\alpha,\alpha'$-bis(*t*-butylperoxy)diisopropylbenzene, 2,5-dimethyl-2,5-bis(*tert*-butylperoxy)hexane, and 2,5-dimethyl-2,5-bis(*t*-butylperoxy)hexyne-3.

Examples of the peroxyketal include *n*-butyl 4,4-bis(*t*-butylperoxy)valerate, 2,2-bis(*tert*-butylperoxy)butane, 1,1-bis(*tert*-butylperoxy)cyclohexane, 1,1-bis(*tert*-hexylperoxy)cyclohexane, 1,1-bis(*tert*-butylperoxy)-3,3,5-trimethylcyclohexane, 1,1-bis(*tert*-hexylperoxy)-3,3,5-trimethylcyclohexane, and 1,1-bis(*tert*-butylperoxy)cyclohexane.

Examples of the peroxyester include $\alpha$-cumyl peroxyneodecanoate, 1,1-dimethyl-3-hydroxybutyl peroxy-2-ethylhexanoate, *tert*-amyl peroxybenzoate, *tert*-butyl peroxybenzoate, and *tert*-butyl peroxypivalate.

Furthermore, as the organic peroxide, a diacyl peroxide such as dibenzoyl peroxide, succinic acid peroxide, dilauroyl peroxide, or didecanoyl peroxide, an alkyl hydroperoxide such as 2,5-dihydroperoxy-2,5-dimethylhexane, cumene hydroperoxide, or *tert*-butyl hydroperoxide, or a peroxydicarbonate such as di(*n*-propyl) peroxydicarbonate, di(sec-butyl) peroxydicarbonate, or di(2-ethylhexyl) peroxydicarbonate may also be used.

Organic peroxides are commercially available from, for example, NOF Corporation, Kayaku Akzo Corporation, etc.

With regard to (Component C) a polymerization initiator in the present invention, one type may be used on its own or two or more types may be used in combination.

The content of Component C in the resin composition for laser engraving is preferably 0.01 to 10 mass%, and more preferably 0.5 to 5 mass%, relative to the total mass of the solids content of the resin composition.

<(Component D) Carbonate bond-containing polyurethane resin>

The laser-engravable resin composition of the present invention preferably further comprises (Component D) a carbonate bond-containing polyurethane resin in addition to the polyurethane resin of Component A.

As a method for introducing a carbonate bond to a polyurethane resin, a method in which a carbonate bond-containing diisocyanate compound or diol compound is used as a starting material in a polyaddition reaction can preferably be cited. A method in which a polycarbonate diol compound containing a polycarbonate bond in the molecule is used as the carbonate bond-containing diol compound is more preferable. Furthermore, Component D does not contain a group represented by Formula (1).

Component D is preferably obtained by synthesis of a polyurethane resin by a polyaddition reaction between a diisocyanate compound represented by Formula (2) and a polycarbonate diol containing a polycarbonate bond in a $Y^0$ moiety of a diol compound represented by Formula (3), which are described above in the explanation of Component A.

The polycarbonate diol is preferably a compound represented by Formula (CD) below.

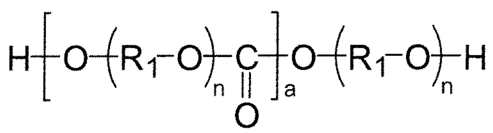

( CD )

In Formula (CD), the $R_{15}$ independently denote a straight-chain, branched chain, and/or cyclic divalent hydrocarbon group having 2 to 50 carbons, which may contain an oxygen atom, etc. (at least one type of atom selected from the group consisting of a nitrogen atom, a sulfur atom, and an oxygen atom) in a carbon skeleton, and the $R_{15}$ may comprise a single component or may comprise a plurality of components. n is an integer of 1 to 500. a denotes an integer of 1 or greater.

Among them, $R_1$ is preferably a dimethylene group, a trimethylene group, a tetramethylene group, or a hexamethylene group, and n is preferably 1 to 5.

With regard to $R_1$, the 'hydrocarbon group' is a saturated or unsaturated hydrocarbon group.

With regard to $R_1$, the 'carbon skeleton' means a structural portion having 2 to 50 carbons forming a hydrocarbon group, and 'may comprise an oxygen atom, etc. in the carbon skeleton' means a structure in which an oxygen atom, etc. is inserted into a carbon-carbon bond of the main chain or side chain. Furthermore, it may be a substituent comprising an oxygen atom, etc. bonded to a carbon atom in a main chain or side chain.

$R_1$ in the polycarbonate diol of Formula (CD) may preferably be incorporated from a diol compound shown below that is preferably used as a starting material for synthesizing the polycarbonate diol.

Preferred examples of the diol compound include a straight-chain aliphatic diol, a branched aliphatic diol, and the cyclic aliphatic diol below.

Examples of the straight-chain aliphatic diol include ethylene glycol, and a straight-chain aliphatic diol having 3 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched aliphatic diol include a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic aliphatic diol include a cyclic aliphatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-$\alpha,\alpha'$-diol, *p*-xylene-$\alpha,\alpha'$-diol, 2,2-bis(4-hydroxycyclohexyl)propane, 2,2-bis(4-hydroxyphenyl)propane, or dimer diol.

Examples of the polyhydric alcohol that is preferably used in order to introduce a hydrocarbon group containing at least one type of atom selected from the group consisting of nitrogen, sulfur, and oxygen in $R_1$ include diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, and 2,5-dihydroxy-1,4-dithiane.

With regard to $R_1$ as a hydrocarbon group having at least one type of atom selected from the group consisting of nitrogen, sulfur, and oxygen, from the viewpoint of solvent resistance $R_1$ preferably comprises at least one ether bond, and from the viewpoint of solvent resistance and durability $R_1$ is more preferably a diethylene glycol-derived group (group represented by $-(CH_2)_2-O-(CH_2)_2-$). Preferred examples of $R_1$ include a group represented by Formula (CD2) below.

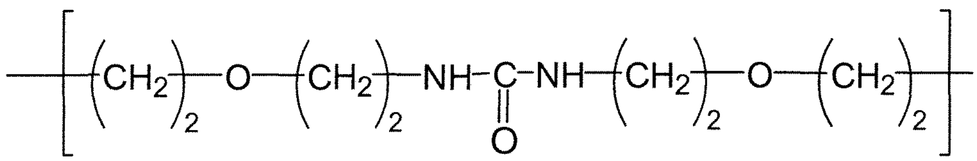

( CD 2 )

The polycarbonate diol may be produced by for example a conventionally known method as described in JP-B-5-29648, and specifically it may be produced by an ester exchange reaction between a diol and a carbonic acid ester.

Examples of commercially available polycarbonate diols include the product name 'PLACCEL CD205PL', the product name 'PLACCEL CD210PL', and the product name 'PLACCEL CD220PL' (all manufactured by Daicel Corporation), 'PCDL T5652' and 'PCDL L4672' (both manufactured by Asahi Kasei), and 'UM-CARB90 (1/1)' (Ube Industries, Ltd.).

In the present invention, with regard to the polycarbonate diol, one type or two or more types may be used according to the intended purpose, but it is desirable to use one type of polycarbonate diol.

The number-average molecular weight of these polycarbonate diols is preferably in the range of 1,000 to 200,000, more preferably in the range of 1,500 to 10,000, and yet more preferably in the range of 2,000 to 8,000.

A polyurethane resin having a carbonate bond may be obtained by subjecting a hydroxy group of the polycarbonate diol to a polyaddition reaction with an isocyanate group of the diisocyanate compound represented by Formula (2). Preferred examples of the diisocyanate compound of Formula (2) include a diisocyanate compound described in the explanation of the method for synthesizing Component A.

Furthermore, in the same way as for Component A, Component D may have an ethylenically unsaturated group at a terminal of a main chain of a polyurethane resin. A method for introducing an ethylenically unsaturated may be carried out by the same method as for Component A.

Component A and Component D are both preferably ethylenically unsaturated group-containing resins.

Preferred examples of Component D include those represented by the structural formula of Formula (D-1) or Formula (D-2) below.

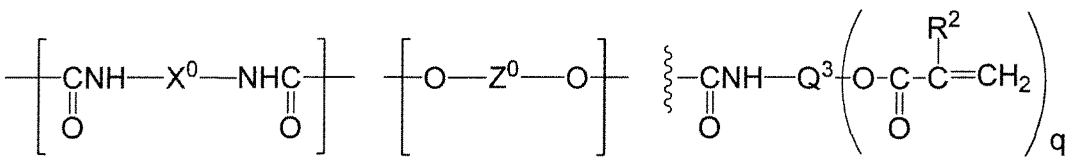

( D - 1 )

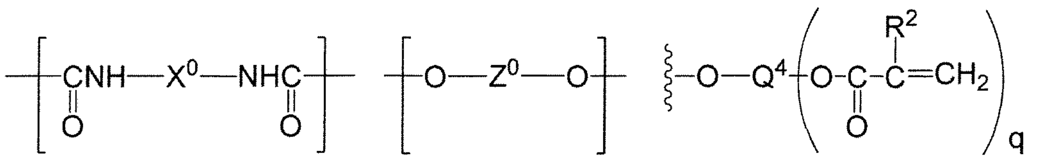

( D - 2 )

In Formula (D-1) and Formula (D-2), $X^0$ has the same meaning as that of $X^0$ in Formula (2), and preferred embodiments are also the same. $Z^0$ denotes a divalent linking group and denotes an organic residue formed by removing two hydroxy groups at the termini of a polycarbonate diol of Formula (CD). $Q^3$, $R^2$, and q have the same meanings as those of $Q^3$, $R^2$, and q in Formula (2-e), and preferred embodiments are also the same. $Q^4$ has the same meaning as that of $Q^4$ in Formula (2-f), and preferred embodiments are also the same. The wavy line portion denotes a bond of a terminal portion of Component D.

Component D preferably has a number-average molecular weight of 800 to 3,000,000, more preferably 800 to 500,000, yet more preferably 1,000 to 100,000, and particularly preferably 1,000 to 50,000.

The content of Component D in the laser-engravable resin composition of the present invention is preferably 2 to 95 mass% relative to the total mass of the solids content, and more preferably 40 to 80 mass%.

The number-average molecular weights of Component A and Component D are both 1,000 to 50,000. It is preferable for the number-average molecular weights of Component A and Component D to be within this range since a flexographic printing plate precursor obtained from the resin composition of the present invention is excellent in terms of non-tackiness, engraving residue removability, printing durability, etc.

<(Component E) Photothermal conversion agent capable of absorbing light having a wavelength of 700 to 1,300 nm>

The resin composition for laser engraving of the present invention preferably further includes (Component E) a photothermal conversion agent capable of absorbing light having a wavelength of 700 to 1,300 nm (hereinafter, called "Component E" as appropriate). That is, it is considered that the photothermal conversion agent in the present invention can promote the thermal decomposition of a cured material during laser engraving by absorbing laser light and generating heat. Therefore, it is preferable that a photothermal conversion agent capable of absorbing light having a wavelength of laser used for graving be selected.

When a laser (a YAG laser, a semiconductor laser, a fiber laser, a surface emitting laser, etc.) emitting infrared at a wavelength of 700 to 1,300 nm is used as a light source for laser engraving, it is preferable for the laser-engravable flexographic printing plate precursor produced by using the resin composition for laser engraving in the present invention to comprise a photothermal conversion agent that has a maximun absorption wavelength at 700 to 1,300 nm.

As Component E in the present invention, various types of dye or pigment are used.

With regard to Component E, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, and preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, and phthalocyanine-based colorants are preferably used. Examples include dyes described in paragraphs 0124 to 0137 of JP-A-2008-63554.

With regard to Component E used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saishin Ganryo Ouyogijutsu' (Latest Applications of Pigment Technology) (CMC Publishing, 1986), 'Insatsu Inki Gijutsu' (Printing Ink Technology) (CMC Publishing, 1984). Examples of pigments include pigments described in paragraphs 0122 to 0125 of JP-A-2009-178869.

Among these pigments, carbon black is preferable.

Any carbon black, regardless of classification by ASTM (American Society for Testing and Materials) and

application (e.g. for coloring, for rubber, for dry cell, etc.), may be used as long as dispersibility, etc. in the resin composition for laser engraving is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products. Examples of carbon black include carbon blacks described in paragraphs 0130 to 0134 of JP-A-2009-178869.

The content of Component E in the laser-engravable resin composition of the present invention greatly depends on the magnitude of the molecular extinction efficient, which is intrinsic to the molecule, but is preferably 0.01 to 30 mass% of the total mass of the solids content of the resin composition, more preferably 0.05 to 20 mass%, and particularly preferably 0.1 to 10 mass%.

<(Component F) Hydrolyzable silyl group- and/or silanol group-containing organosilicon compound>

The resin composition for laser engraving of the present invention preferably further comprises (Component F) a hydrolyzable silyl group- and/or silanol group-containing organosilicon compound (hereinafter, called 'Component F' as appropriate).

The 'hydrolyzable silyl group' in (Component F) the hydrolyzable silyl group- and/or silanol group-containing organosilicon compound is a silyl group that can be hydrolyzed; examples of the hydrolyzable group include an alkoxy group, a mercapto group, a halogen atom, an amide group, an acetoxy group, an amino group, and an isopropenoxy group. A silyl group undergoes hydrolysis to become a silanol group, and a silanol group undergoes dehydration-condensation to form a siloxane bond. Such a hydrolyzable silyl group or silanol group is preferably one represented by Formula (S) below.

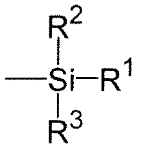 ( S )

In Formula (S) above, at least one of $R^1$ to $R^3$ denotes a hydrolyzable group selected from the group consisting of an alkoxy group, a mercapto group, a halogen atom, an amide group, an acetoxy group, an amino group, and an isopropenoxy group, or a hydroxy group. The remainder of $R^1$ to $R^3$ independently denotes a hydrogen atom, a halogen atom, or a monovalent organic substituent (examples including an alkyl group, an aryl group, an alkenyl group, an alkynyl group, and an aralkyl group).

In Formula (S) above, the hydrolyzable group bonded to the silicon atom is particularly preferably an alkoxy group or a halogen atom, and more preferably an alkoxy group.

From the viewpoint of rinsing properties and printing durability, the alkoxy group is preferably an alkoxy group having 1 to 30 carbon atoms, more preferably an alkoxy group having 1 to 15 carbon atoms, yet more preferably an alkoxy group having 1 to 5 carbon atoms, particularly preferably an alkoxy group having 1 to 3 carbon atoms, and most preferably a methoxy group or an ethoxy group.

Furthermore, examples of the halogen atom include an F atom, a Cl atom, a Br atom, and an I atom, and from the viewpoint of ease of synthesis and stability it is preferably a Cl atom or a Br atom, and more preferably a Cl atom.

Component F in the present invention is preferably a compound having one or more groups represented by Formula (S) above, and more preferably a compound having two or more. A compound having two or more hydrolyzable silyl groups is particularly preferably used. That is, a compound having in the molecule two or more silicon atoms having a hydrolyzable group bonded thereto is preferably used. The number of silicon atoms having a hydrolyzable group bond thereto contained in Component F is preferably at least 2 but no greater than 6, and most preferably 2 or 3.

A range of 1 to 4 of the hydrolyzable groups may bond to one silicon atom, and the total number of hydrolyzable groups in Formula (S) is preferably in a range of 2 or 3. It is particularly preferable that three hydrolyzable groups are bonded to a silicon atom. When two or more hydrolyzable groups are bonded to a silicon atom, they may be identical to or different from each other.

As the hydrolyzable group, specific preferred examples of the alkoxy group include a methoxy group, an ethoxy group, a propoxy group, an isopropoxy group, a butoxy group, a tert-butoxy group, a phenoxy group, and a benzyloxy group. A plurality of each of these alkoxy groups may be used in combination, or a plurality of different alkoxy groups may be used in combination.

Examples of the alkoxysilyl group having an alkoxy group bonded thereto include a trialkoxysilyl group such as a trimethoxysilyl group, a triethoxysilyl group, a triisopropoxysilyl group, or a triphenoxysilyl group; a dialkoxymonoalkylsilyl group such as a dimethoxymethylsilyl group or a diethoxymethylsilyl group; and a monoalkoxydialkylsilyl

group such as a methoxydimethylsilyl group or an ethoxydimethylsilyl group.

Component F preferably has at least a sulfide group, an ester bond, a urethane bond, an ether bond, a urea bond, or an imino group.

Among them, from the viewpoint of crosslinkability, Component F preferably comprises, from the viewpoint of removability (rinsing properties) of engraving residue, a sulfide group, an ester bond, a urethane bond, or an ether bond, which is easily decomposed by aqueous alkali. Component F may have one of these group or bond and have two or more of these groups or bonds. Component F may have two or more bonds, such as two ester bonds. Component F has particularly preferably an ether bond contained in an oxyalkylene group.

In the present invention, the sulfide group includes a disulfide group (-S-S-), a trisulfide (-S-S-S-), a tetrasulfide group (-S-S-S-S-), etc.

Furthermore, Component F in the present invention is preferably a compound not having an ethylenically unsaturated bond.

As Component F in the present invention, there can be cited a compound in which a plurality of groups represented by Formula (S) above are bonded via a divalent linking group, and from the viewpoint of the effect, such a divalent linking group is preferably a linking group having a sulfide group (-S-), an imino group (-N(R)-) a urea group or a urethane bond (-OCON(R)- or - N(R)COO-). R denotes a hydrogen atom or a substituent. Examples of the substituent denoted by R include an alkyl group, an aryl group, an alkenyl group, an alkynyl group, and an aralkyl group.

A method for synthesizing the compound comprising at least one type from a hydrolyzable silyl group and a silanol group is not particularly limited, and synthesis can be carried out by a known method. Examples of the method include a method described in paragraphs 0019 to 0021 of JP-A-2011-136455.

Specific examples of Component F that can be employed in the present invention are shown below, but the present invention should not be construed as being limited by these compounds. In the structural formulae below, Me denotes a methyl group and Et denotes an ethyl group.

F-1 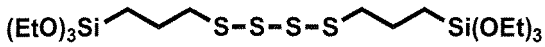

F-2 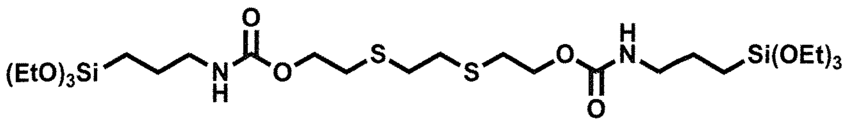

F-3 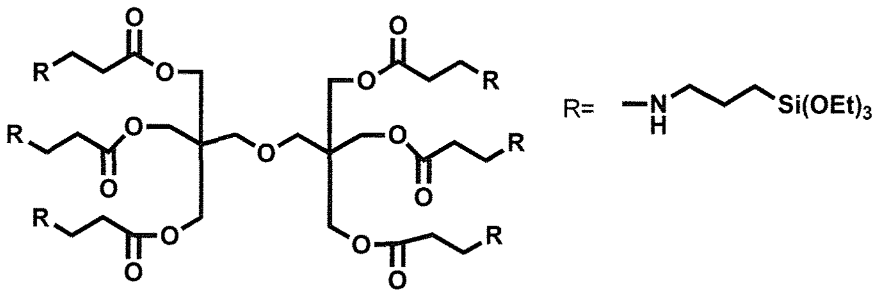

F-4 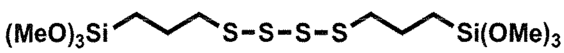

F-5 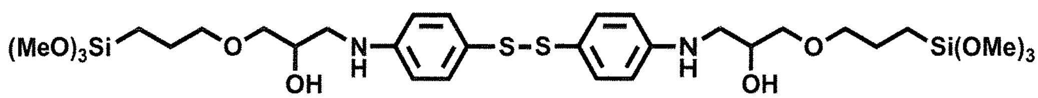

F-6 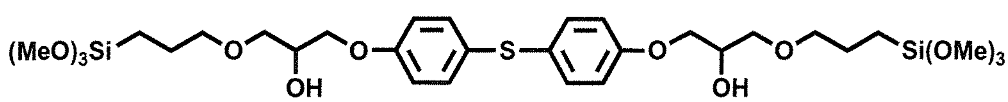

F-7 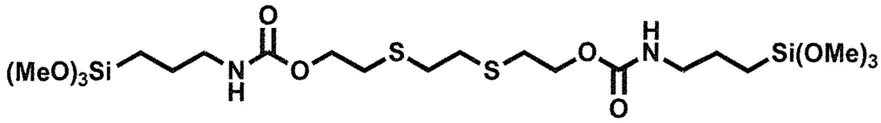

F-8 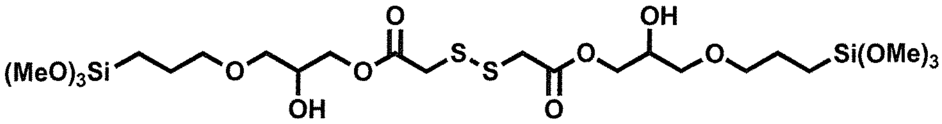

F-9 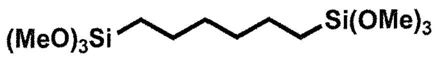

F-10 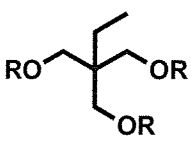 R= 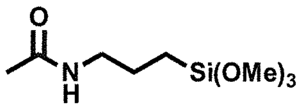

F-11 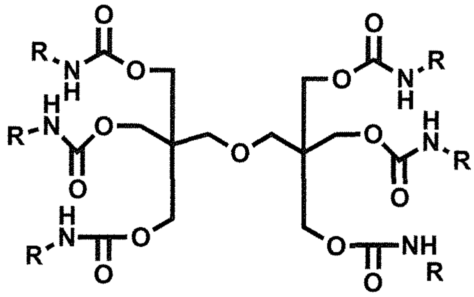 R= 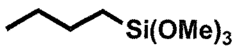

F-12 a mixture of 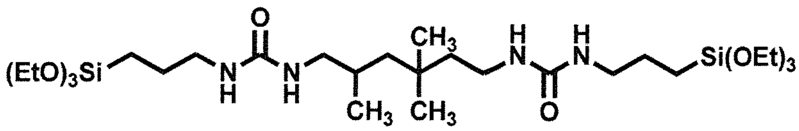

and

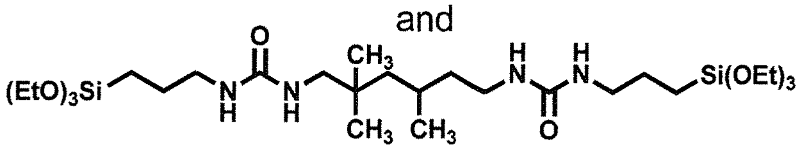

F-13 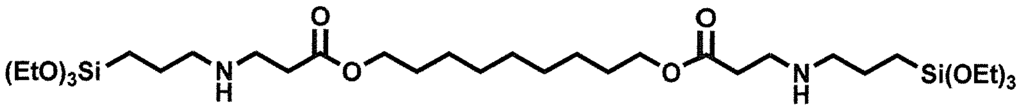

F-14 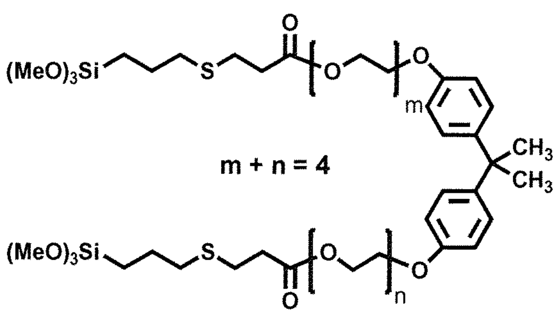

m + n = 4

F-15 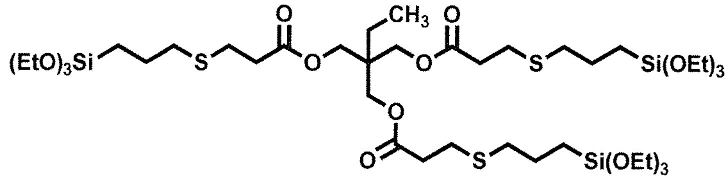

F-16 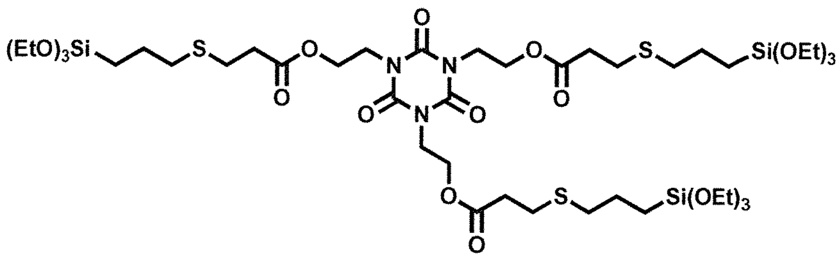

F-17 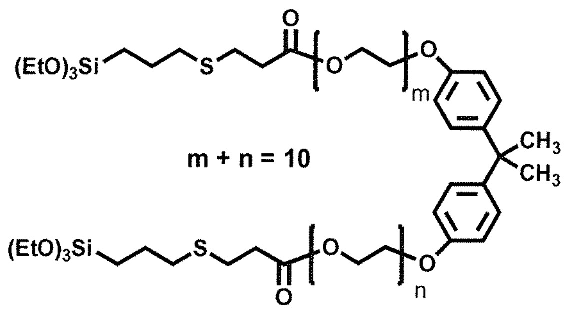

m + n = 10

F-18 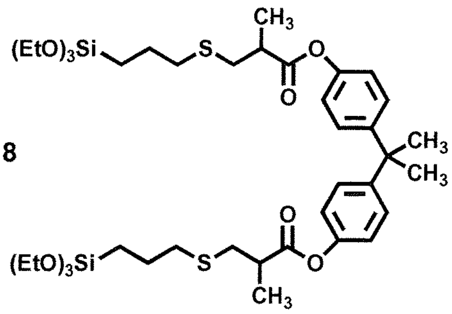

F-19 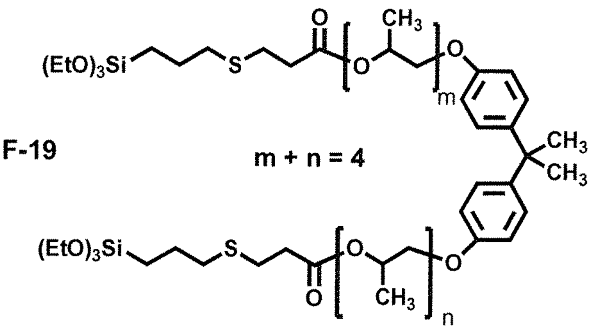

m + n = 4

F-20 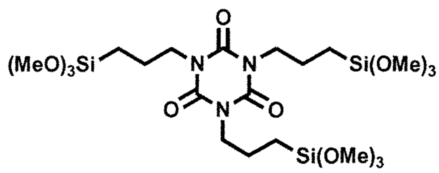

F-21 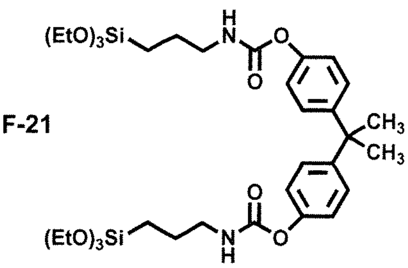

F-22 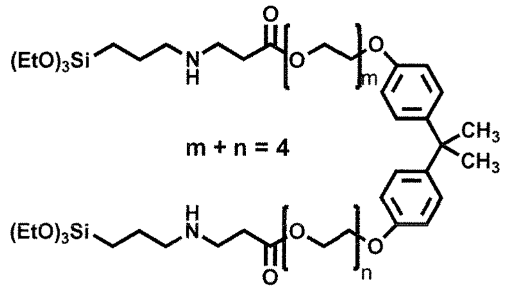

m + n = 4

F-23 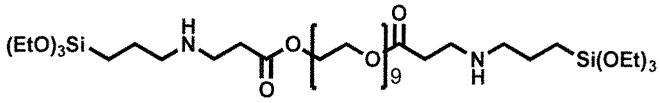

F-24 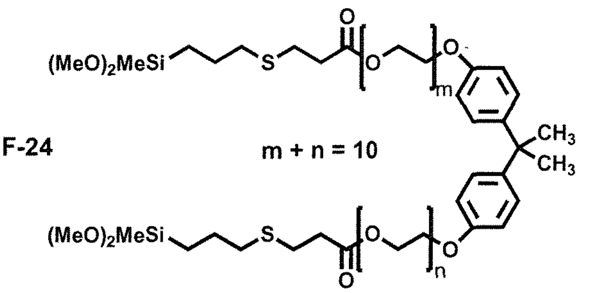

m + n = 10

F-25 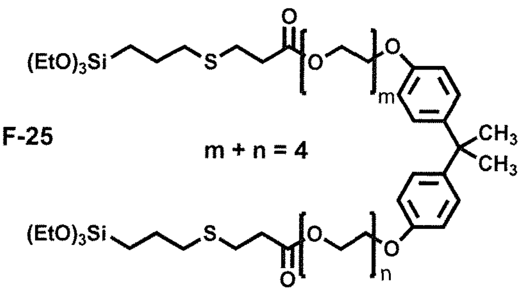

m + n = 4

With regard to Component F in the resin composition of the present invention, one type may be used on its own or two or more types may be used in combination.

The content of Component F in the laser-engravable resin composition of the present invention is preferably 0.1 to 80 mass% of the total mass of the solids content, more preferably 1 to 40 mass%, and particularly preferably 2 to 30 mass%.

<Alcohol exchange reaction catalyst>

The resin composition of the present invention preferably comprises an alcohol exchange reaction catalyst in order to promote the formation of Component F. The alcohol exchange reaction catalyst may be used without limitation as long as it is a reaction catalyst that is usually used in a silane coupling reaction, and is preferably at least one type selected from the group consisting of an acid, a base, and a metal complex.

Examples of the acid include a protonic acid (hydrochloric acid, sulfuric acid, phosphoric acid, etc.), a Lewis acid ($AlCl_3$, $ZnCl_2$, etc.), and a photo-acid generator.

Examples of the base include an inorganic base (NaOH, $Na_2CO_3$, etc.), a metal alkoxide ($CH_3ONa$, *tert*-BuOK, etc.), and an amine.

Specific acid, base, and metal complex compounds that are representative alcohol exchange reaction catalysts are preferably compounds described in paragraphs 0060 to 0070 of JP-A-2011-136430.

The content of the alcohol exchange reaction catalyst in the resin composition for a flexographic printing plate of the present invention is preferably 0.1 to 5 mass% relative to the solids content total mass of the resin composition, and more preferably 0.3 to 3 mass%.

<Other additives>

The resin composition for laser engraving of the present invention may comprise as appropriate various types of known additives as long as the effects of the present invention are not inhibited. Examples include a filler, a plasticizer, a wax, a metal oxide, an antiozonant, an anti-deterioration agent, a thermopolymerization inhibitor, a colorant, and a fragrance, and one type thereof may be used on its own or two more types may be used in combination.

(Laser-engravable flexographic printing plate precursor)

A first embodiment of the laser-engravable flexographic printing plate precursor of the present invention comprises a relief-forming layer formed from the resin composition for laser engraving of the present invention.
A second embodiment of the laser-engravable flexographic printing plate precursor of the present invention comprises a crosslinked relief-forming layer formed by crosslinking a relief-forming layer formed from the resin composition for laser engraving of the present invention.
In the present invention, the 'laser-engravable flexographic printing plate precursor' means both or one of a precursor having a crosslinkable relief-forming layer formed from the resin composition for laser engraving in a state before being crosslinked and a precursor in a state in which the layer is cured by light or heat.
In the present invention, the 'relief-forming layer' means a layer in a state before being crosslinked, that is, a layer formed from the resin composition for laser engraving of the present invention, which may be dried as necessary.
In the present invention, the 'crosslinked relief-forming layer' means a layer formed by crosslinking the relief-forming layer. The crosslinking is carried out by means of heat and/or light. Furthermore, the crosslinking is not particularly limited as long as it is a reaction by which the resin composition is cured.
The 'flexographic printing plate' can be obtained by laser engraving the printing plate having a crosslinked relief-forming layer.
Moreover, in the present invention, the 'relief layer' means a layer of the flexographic printing plate formed by engraving using a laser, that is, the crosslinked relief-forming layer after laser engraving.
The laser-engravable flexographic printing plate precursor of the present invention has a relief-forming layer formed from a resin composition for laser engraving comprising the above-mentioned components. The (crosslinked) relief-forming layer is preferably provided above a support.
The laser-engravable flexographic printing plate precursor may further comprise, as necessary, an adhesive layer between the support and the (crosslinked) relief-forming layer and, above the (crosslinked) relief-forming layer, a slip coat layer and a protection film.

<Relief-forming layer>

The relief-forming layer is a layer formed from the resin composition for laser engraving of the present invention and is preferably a thermally crosslinkable layer.
As a mode in which a flexographic printing plate is prepared using the laser-engravable flexographic printing plate precursor, a mode in which a flexographic printing plate is prepared by crosslinking a relief-forming layer to thus form a flexographic printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a flexographic printing plate having a relief layer with a sharp shape after laser engraving.
The relief-forming layer may be formed by molding the resin composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate making or printing or may be placed and immobilized thereon, and a support is not always required.
A case in which the relief-forming layer is mainly formed in a sheet shape is explained as an Example below.

<Support>

A material used for the support of the laser-engravable flexographic printing plate precursor is not particularly limited, but one having high dimensional stability is preferably used, and examples thereof include metals such as steel, stainless steel, or aluminum, plastic resins such as a polyester (e.g. polyethylene terephthalate (PET), or polybutylene terephthalate (PBT)), polyacrylonitrile (PAN) or polyvinyl chloride, synthetic rubbers such as styrenebutadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

<Adhesive layer>

An adhesive layer may be provided between the relief-forming layer and the support for the purpose of strengthening the adhesion between the two layers. Examples of materials (adhesives) that can be used in the adhesive layer include those described in 'Handbook of Adhesives', Second Edition, Ed by I. Skeist, (1977).

<Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 μm, and more preferably 50 to 200 μm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

(Process for producing laser-engravable flexographic printing plate precursor)

The process for producing a laser-engravable flexographic printing plate precursor is not particularly limited, and examples thereof include a method in which the resin composition for laser engraving is prepared, solvent is removed from as necessary this coating solution composition for laser engraving, and it is melt-extruded onto a support. Alternatively, a method may be employed in which the coating solution composition for laser engraving is cast onto a support, and this is dried in an oven to thus remove solvent from the coating solution composition.

Among them, the process for producing a laser-engravable flexographic printing plate of the present invention is preferably a production process comprising a layer formation step of forming a relief-forming layer from the resin composition for laser engraving of the present invention and a crosslinking step of crosslinking the relief-forming layer by means of heat and/or light to thus obtain a flexographic printing plate precursor having a crosslinked relief-forming layer.

Subsequently, as necessary, a protection film may be laminated on the (crosslinked) relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

<Layer formation step>

The process for producing a laser-engravable flexographic printing plate precursor of the present invention preferably comprises a layer formation step of forming a relief-forming layer from the resin composition for laser engraving of the present invention.

Preferred examples of a method for forming the relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove solvent.

The resin composition for laser engraving may be produced by, for example, dissolving or dispersing Component A to Component C, and as optional components Component D to Comoponent F, a fragrance, a plasticizer, etc. in an appropriate solvent, and then mixing the solution. Since it is preferably to remove most of the solvent component in a stage of producing a flexographic printing plate precursor, it is preferable to use as the solvent a volatile low-molecular-weight alcohol (e.g. methanol, ethanol, n-propanol, isopropanol, propylene glycol monomethyl ether, toluene), etc., and adjust the temperature, etc. to thus reduce as much as possible the total amount of solvent to be added.

The thickness of the (crosslinked) relief-forming layer in the laser-engravable flexographic printing plate precursor before and after crosslinking is preferably at least 0.05 mm but no greater than 10 mm, more preferably at least 0.05 mm but no greater than 7 mm, and yet more preferably at least 0.05 mm but no greater than 3 mm.

<Crosslinking step>

The process for producing a laser-engravable flexographic printing plate precursor of the present invention is preferably a production process that comprises a crosslinking step of thermally crosslinking the relief-forming layer to thus obtain a flexographic printing plate precursor having a crosslinked relief-forming layer.

The relief-forming layer may be crosslinked by heating the flexographic printing plate precursor for laser engraving (step of crosslinking by means of heat). As heating means for carrying out crosslinking by heat, there can be cited a method in which a printing plate precursor is heated in a hot air oven or a far-infrared oven for a predetermined period of time and a method in which it is put into contact with a heated roller for a predetermined period of time.
Due to the relief-forming layer being thermally crosslinked, firstly, a relief formed after laser engraving becomes sharp and, secondly, tackiness of engraving residue formed during laser engraving is suppressed.

(Flexographic printing plate and process for making same)

The process for making a flexographic printing plate of the present invention preferably comprises a layer formation step of forming a relief-forming layer from the resin composition for laser engraving of the present invention, a crosslinking step of crosslinking the relief-forming layer by means of heat to thus obtain a flexographic printing plate precursor having a crosslinked relief-forming layer, and an engraving step of laser-engraving the flexographic printing plate precursor having the crosslinked relief-forming layer.
The flexographic printing plate of the present invention is a flexographic printing plate having a relief layer obtained by crosslinking and laser-engraving a layer formed from the resin composition for laser engraving of the present invention, and is preferably a flexographic printing plate made by the process for making a flexographic printing plate of the present invention.
The flexographic printing plate of the present invention may suitably employ a UV ink and an aqueous ink when printing.
The layer formation step and the crosslinking step in the process for making a flexographic printing plate of the present invention mean the same as the layer formation step and the crosslinking step in the above-mentioned process for producing a laser-engravable flexographic printing plate precursor, and preferred ranges are also the same.

<Engraving step>

The process for making a flexographic printing plate of the present invention preferably comprises an engraving step of laser-engraving the flexographic printing plate precursor having a crosslinked relief-forming layer.
The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.
This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.
In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.
As the infrared laser used in the engraving step, from the viewpoint of productivity, cost, etc., a carbon dioxide laser (CO2 laser) or a semiconductor laser is preferable. In particular, a fiber-coupled semiconductor infrared laser (FC-LD) is preferably used. In general, compared with a CO2 laser, a semiconductor laser has higher efficiency laser oscillation, is less expensive, and can be made smaller. Furthermore, it is easy to form an array due to the small size. Moreover, the shape of the beam can be controlled by treatment of the fiber.
With regard to the semiconductor laser, one having a wavelength of 700 to 1,300 nm is preferable, and one having a wavelength of 800 to 1,200 nm is more preferable, one having a wavelength of 860 to 1,200 nm is yet more preferable, and one having a wavelength of 900 to 1,100 nm is particularly preferable.
Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' (The Laser Society of Japan), 'Jitsuyo Laser Gijutsu' (Applied Laser Technology) (The Institute of Electronics and Communication

Engineers), etc.

Moreover, as plate making equipment comprising a fiber-coupled semiconductor laser that can be used suitably in the process for making a flexographic printing plate employing the flexographic printing plate precursor of the present invention, those described in detail in JP-A-2009-172658 and JP-A-2009-214334 can be cited.

The process for making a flexographic printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13, and yet more preferably no greater than 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid may comprise a surfactant.

From the viewpoint of removability of engraving residue and little influence on a flexographic printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, amphoteric surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 mass% relative to the total mass of the rinsing liquid, and more preferably 0.05 to 10 mass%.

The flexographic printing plate of the present invention having a relief layer above the surface of an optional substrate such as a support may be produced as described above.

From the viewpoint of satisfying suitability for various aspects of printing, such as abrasion resistance and ink transfer properties, the thickness of the relief layer of the flexographic printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the flexographic printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target at 25°C so as to deform it, measures the amount of deformation (indentation depth), and converts it into a numerical value.

The flexographic printing plate of the present invention is particularly preferably used in printing by a flexographic

printer using a UV ink, and can be used in printing by a letterpress printer using any one of an aqueous, oil-based, and UV inks, and printing is also possible by a flexographic printer using an aqueous ink. The flexographic printing plate of the present invention has excellent rinsing properties, there is little engraved residue, the relief layer obtained has excellent elasticity, and the flexographic printing plate has excellent printing durability and ink laydown used in UV inks and aqueous inks, and printing can be carried out for a long period of time without plastic deformation of the relief layer or degradation of printing durability.

Example

The present invention is explained in further detail below by reference to Examples, but the present invention should not be construed as being limited to these Examples. Furthermore, 'parts' in the description below means 'parts by mass', and '%' means '% by mass', unless otherwise specified. Moreover, the number-average molecular weight (Mn) of a polymer in the Production Examples are values measured by a GPC method unless otherwise specified. In further detail, Mn are measured by a method below.

Measurement was carried out using high performance GPC equipment (HLC-8220GPC, Tosoh Corporation) and columns (TSK gel Super HZM-M, HZ4000, HZ3000, HZ2000, Tosoh Corporation), tetrahydrofuran (THF) being used as an eluent. The column temperature was set at 40°C. As a sample that was to be injected into the GPC equipment, a THF solution having a sample concentration of 0.1 mass% was prepared and filtered using a 0.5 μm membrane filter. The amount injected was 10 μL. As a detector, an RI (refractive index) detector was used.

<Production Example 1: polyurethane A-3 production example>

A three-necked round-bottomed flask equipped with a stirring blade, a condenser, and a thermometer was charged with 74.0 parts (0.5 parts by mole) of 2,2-bis(hydroxymethyl)butyric acid (carboxyl group-containing diol compound 3, Tokyo Chemical Industry Co., Ltd.), 63.2 parts (0.376 parts by mole) of hexane diisocyanate (diisocyanate compound (2)-2, Tokyo Chemical Industry Co., Ltd.), 1.0 part of 2,6-di-*tert*-butyl-4-methylphenol (Tokyo Chemical Industry Co., Ltd.), and 0.015 parts of dibutyltin dilaurylate (Tokyo Chemical Industry Co., Ltd.), a reaction was carried out at 80°C for 3 hours, 93.2 parts (0.5 parts by mole) of 2-ethylhexyl glycidyl ether (epoxy compound (1)-10A, Tokyo Chemical Industry Co., Ltd.) and 1.0 part of 2-ethyl-4-methylimidazole (Shikoku Chemicals Corporation) as a catalyst were then added, and a reaction was carried out at 80°C for a further 3 hours. Subsequently, 39.2 parts (0.253 parts by mole) of 2-methacryloyloxyethyl isocyanate (Karenz MOI, Showa Denko K.K.) and 0.015 parts of dibutyltin dilaurylate were added, and a reaction was carried out for a further 2 hours, thus giving polyurethane A-3 (number-average molecular weight: 20,000).

<Production Example 2: polyurethane A-1 production example>

A three-necked round-bottomed flask equipped with a stirring blade, a condenser, and a thermometer was charged with 74.0 parts (0.5 parts by mole) of 2,2-bis(hydroxymethyl)butyric acid, 93.2 parts (0.5 parts by mole) of 2-ethylhexyl glycidyl ether, and 1.0 part of 2-ethyl-4-methylimidazole as a catalyst, and a reaction was carried out at 80°C for 3 hours. Subsequently, 63.2 parts (0.376 parts by mole) of hexane diisocyanate and 0.015 parts of dibutyltin dilaurylate were added, and a reaction was carried out for a further 3 hours, thus giving polyurethane A-1 (number-average molecular weight: 10,000).

<Production Example 3: polyurethane A-2 production example>

A three-necked round-bottomed flask equipped with a stirring blade, a condenser, and a thermometer was charged with 74.0 parts (0.5 parts by mole) of 2,2-bis(hydroxymethyl)butyric acid, 104.8 parts (0.624 parts by mole) of hexane diisocyanate, and 0.015 parts of dibutyltin dilaurylate, a reaction was carried out at 80°C for 3 hours, 93.2 parts (0.5 parts by mole) of 2-ethylhexyl glycidyl ether and 1.0 part of 2-ethyl-4-methylimidazole as a catalyst were then added, and a reaction was carried out at 80°C for a further 3 hours, thus giving polyurethane A-2 (number-average molecular weight: 7,000).

<Production Example 4: polyurethane A-4 production example>

A three-necked round-bottomed flask equipped with a stirring blade, a condenser, and a thermometer was charged with 74.0 parts (0.5 parts by mole) of 2,2-bis(hydroxymethyl)butyric acid, 104.8 parts (0.624 parts by mole) of hexane diisocyanate, 1.0 part of 2,6-di-*tert*-butyl-4-methylphenol, and 0.015 parts of dibutyltin dilaurylate, a reaction was carried out at 80°C for 3 hours, 36.5 parts (0.253 parts by mole) of 2-hydroxypropyl methacrylate (Tokyo Chemical

Industry Co., Ltd.) and 0.015 parts of dibutyltin dilaurylate were then added, and a reaction was carried out for a further 2 hours. Subsequently, 93.2 parts (0.5 parts by mole) of 2-ethylhexyl glycidyl ether and 1.0 part of 2-ethyl-4-methylimidazole as a catalyst were added, and a reaction was carried out at 80°C for a further 3 hours, thus giving polyurethane A-4 (number-average molecular weight: 8,000).

<Production Example 5: polyurethane A-5 production example>

Polyurethane A-5 (number-average molecular weight: 15,000) was obtained in the same manner as in Production Example 1 except that carboxyl group-containing diol 3 was replaced by diol 4, 2-ethylhexyl glycidyl ether (epoxy compound (1)-10A) was replaced by (1)-14A, and hexane diisocyanate (diisocyanate compound (2)-2) was replaced by (2)-4, each being at the equivalent number of moles.

<Production Example 6: polyurethane A-6 production example>

Polyurethane A-6 (number-average molecular weight: 17,000) was obtained in the same manner as in Production Example 1 except that carboxyl group-containing diol 3 was replaced by diol 5, 2-ethylhexyl glycidyl ether (epoxy compound (1)-10A) was replaced by (1)-26A, and hexane diisocyanate (diisocyanate compound (2)-2) was replaced by (2)-7, each being at the equivalent number of moles.

<Production Example 7: polyurethane A-7 production example>

Polyurethane A-7 (number-average molecular weight: 12,000) was obtained in the same manner as in Production Example 1 except that carboxyl group-containing diol 3 was replaced by diol 6 and hexane diisocyanate (diisocyanate compound (2)-2) was replaced by (2)-8, each being at the equivalent number of moles.

<Production Example 8: polyurethane A-8 production example>

Polyurethane A-8 (number-average molecular weight: 18,000) was obtained in the same manner as in Production Example 1 except that carboxyl group-containing diol 3 was replaced by diol 7, 2-ethylhexyl glycidyl ether (epoxy compound (1)-10A) was replaced by (1)-11A, and hexane diisocyanate (diisocyanate compound (2)-2) was replaced by (2)-5, each being at the equivalent number of moles.

<Production Example 9: polyurethane A-9 production example>

Polyurethane A-9 (number-average molecular weight: 900) was obtained in the same manner as in Production Example 4 except that carboxyl group-containing diol 3 was replaced by diol 8 and 2-ethylhexyl glycidyl ether (epoxy compound (1)-10A) was replaced by (1)-18A, each being at the equivalent number of moles.

<Production Example 10: polyurethane A-10 production example>

Polyurethane A-10 (number-average molecular weight: 7,000) was obtained in the same manner as in Production Example 4 except that carboxyl group-containing diol 3 was replaced by diol 9, 2-ethylhexyl glycidyl ether (epoxy compound (1)-10A) was replaced by (1)-23A, and hexane diisocyanate (diisocyanate compound (2)-2) was replaced by (2)-3, each being at the equivalent number of moles.

<Production Example 11: polyurethane A-11 production example>

Polyurethane A-11 (number-average molecular weight: 9,000) was obtained in the same manner as in Production Example 4 except that carboxyl group-containing diol 3 was replaced by diol 13, 2-ethylhexyl glycidyl ether (epoxy compound (1)-10A) was replaced by (1)-25A, and hexane diisocyanate (diisocyanate compound (2)-2) was replaced by (2)-4, each being at the equivalent number of moles.

<Production Example 12: polyurethane A-12 production example>

Polyurethane A-12 (number-average molecular weight: 8,000) was obtained in the same manner as in Production Example 4 except that carboxyl group-containing diol 3 was replaced by diol 15, 2-ethylhexyl glycidyl ether (epoxy compound (1)-10A) was replaced by (1)-27A, and hexane diisocyanate (diisocyanate compound (2)-2) was replaced by (2)-7, each being at the equivalent number of moles.

<Production Example 13: polyurethane A-13 production example>

Polyurethane A-13 (number-average molecular weight: 54,000) was obtained in the same manner as in Production Example 1 except that carboxyl group-containing diol 3 was replaced by diol 19, 2-ethylhexyl glycidyl ether (epoxy compound (1)-10A) was replaced by (1)-31A, hexane diisocyanate (diisocyanate compound (2)-2) was replaced by (2)-8, and 2-methacryloyloxyethyl isocyanate was replaced by 2-acryloyloxyethyl isocyanate (Karenz AOI, Showa Denko K.K.), each being at the equivalent number of moles.

<Production Example 14: polyurethane A-14 production example>

Polyurethane A-14 (number-average molecular weight: 14,000) was obtained in the same manner as in Production Example 1 except that carboxyl group-containing diol 3 was replaced by diol 20, 2-ethylhexyl glycidyl ether (epoxy compound (1)-10A) was replaced by (1)-35A, hexane diisocyanate (diisocyanate compound (2)-2) was replaced by (2)-5, and 2-methacryloyloxyethyl isocyanate was replaced by 2-acryloyloxyethyl isocyanate, each being at the equivalent number of moles.

<Production Example 15: polyurethane A-15 production example>

A three-necked round-bottomed flask equipped with a stirring blade, a condenser, and a thermometer was charged with 89.0 parts (0.5 parts by mole) of *N,N*-bis(hydroxymethyl)-3-carboxypropionamide (carboxyl group-containing diol compound 25, Tokyo Chemical Industry Co., Ltd.), 104.8 parts (0.624 parts by mole) of hexane diisocyanate, 1.0 part of 2,6-di-*tert*-butyl-4-methylphenol, and 0.015 parts of dibutyltin dilaurylate, a reaction was carried out at 80°C for 3 hours, 76.1 parts (0.5 parts by mole) of $\alpha$-pinene oxide (epoxy compound (1)-36A, Tokyo Chemical Industry Co., Ltd.) and 1.0 part of 2-ethyl-4-methylimidazole as a catalyst were then added, and a reaction was carried out at 80°C for a further 3 hours. Subsequently, 32.9 parts (0.253 parts by mole) of 2-hydroxypropyl acrylate (Tokyo Chemical Industry Co., Ltd.) and 0.015 parts of dibutyltin dilaurylate were added, and a reaction was carried out for a further 2 hours, thus giving polyurethane A-15 (number-average molecular weight: 10,000).

<Production Example 16: polyurethane A-16 production example>

Polyurethane A-16 (number-average molecular weight: 10,000) was obtained in the same manner as in Production Example 15 except that carboxyl group-containing diol 25 was replaced by diol 27, hexane diisocyanate (diisocyanate compound (2)-2) was replaced by (2)-3, and $\alpha$-pinene oxide (epoxy compound (1)-36A) was replaced by (1)-5A, each being at the equivalent number of moles.

<Production Example 17: polyurethane A-17 production example>

Polyurethane A-17 (number-average molecular weight: 8,000) was obtained in the same manner as in Production Example 15 except that carboxyl group-containing diol 25 was replaced by diol 29, hexane diisocyanate (diisocyanate compound (2)-2) was replaced by (2)-4, $\alpha$-pinene oxide (epoxy compound (1)-36A) was replaced by (1)-10A, and 2-hydroxypropyl acrylate was replaced by 2-hydroxyethyl methacrylate, each being at the equivalent number of moles.

<Production Example 18: polyurethane A-18 production example>

Polyurethane A-18 (number-average molecular weight: 8,000) was obtained in the same manner as in Production Example 17 except that carboxyl group-containing diol 29 was replaced by diol 33, diisocyanate compound (2)-4 was replaced by (2)-7, and epoxy compound (1)-10A was replaced by (1)-14A, each being at the equivalent number of moles.

<Production Example 19: polyurethane A-19 production example>

Polyurethane A-19 (number-average molecular weight: 10,000) was obtained in the same manner as in Production Example 17 except that carboxyl group-containing diol 29 was replaced by diol 39, diisocyanate compound (2)-4 was replaced by (2)-8, epoxy compound (1)-10A was replaced by (1)-26A, and 2-hydroxyethyl methacrylate was replaced by 2-hydroxyethyl acrylate, each being at the equivalent number of moles.

<Production Example 20: polyurethane A-20 production example>

Polyurethane A-20 (number-average molecular weight: 9,000) was obtained in the same manner as in Production Example 19 except that carboxyl group-containing diol 39 was replaced by diol 40, diisocyanate compound (2)-8 was replaced by (2)-5, and epoxy compound (1)-26A was replaced by (1)-10A, each being at the equivalent number of moles.

<Production Example 21: polyurethane A-21 production example>

Polyurethane A-21 (number-average molecular weight: 18,000) was obtained in the same manner as in Production Example 1 except that 2-ethylhexyl glycidyl ether (epoxy compound (1)-10A) was replaced by (1)-37A at the equivalent number of moles.

<Production Example 22: polyurethane A-22 production example>

Polyurethane A-22 (number-average molecular weight: 15,000) was obtained in the same manner as in Production Example 1 except that 2-ethylhexyl glycidyl ether (epoxy compound (1)-10A) was replaced by (1)-38A at the equivalent number of moles.

The methods for synthesizing the polyurethane of Component A are categorized into Methods A to D below.

Method A: an epoxy group is added to the carboxyl group of a carboxyl group-containing diol compound and subsequently a polyurethane is formed by a polyaddition reaction with a diisocyanate compound (there is no ethylenically unsaturated group at a terminal of the polyurethane resin).

Method B: a polyurethane is formed by a polyaddition reaction between a carboxyl group-containing diol compound and a diisocyanate compound, and an epoxy group is then added to the carboxyl group (there is no ethylenically unsaturated group at a terminal of the polyurethane resin).

Method C: a polyurethane is formed by a polyaddition reaction between a carboxyl group-containing diol compound and a diisocyanate compound, an epoxy group is then added to the carboxyl group, and an ethylenically unsaturated group is finally introduced at a terminal of the polyurethane resin.

Method D: a polyurethane is formed by a polyaddition reaction between a carboxyl group-containing diol compound and a diisocyanate compound, an ethylenically unsaturated group is then introduced at a terminal of the polyurethane resin, and an epoxy group is finally added to the carboxyl group.

The starting materials, groups represented by Formula (1), synthetic methods, types of terminal functional group, and number-average molecular weights of polyurethane resins A-1 to A-22 are shown as a list in Table 1.

(Table 1)

| (Component A) polyurethane | Carboxyl group-containing diol | Group represented by Formula (1) (*) | Diisocyanate compound | Terminal functional group (**) | Synthetic method | Number-average molecular weight |
|---|---|---|---|---|---|---|
| A-1 | 3 | (1)-10 | (2)-2 | -OH | A | 10,000 |
| A-2 | 3 | (1)-10 | (2)-2 | -NCO | B | 7,000 |
| A-3 | 3 | (1)-10 | (2)-2 | 1 | C | 20,000 |
| A-4 | 3 | (1)-10 | (2)-2 | 2 | D | 8,000 |
| A-5 | 4 | (1)-14 | (2)-4 | 1 | C | 15,000 |
| A-6 | 5 | (1)-26 | (2)-7 | 1 | C | 17,000 |
| A-7 | 6 | (1)-10 | (2)-8 | 1 | C | 12,000 |
| A-8 | 7 | (1)-11 | (2)-5 | 1 | C | 18,000 |
| A-9 | 8 | (1)-18 | (2)-2 | 2 | D | 900 |
| A-10 | 9 | (1)-23 | (2)-3 | 2 | D | 7,000 |
| A-11 | 13 | (1)-25 | (2)-4 | 2 | D | 9,000 |
| A-12 | 15 | (1)-27 | (2)-7 | 2 | D | 8,000 |

(continued)

| (Component A) polyurethane | Carboxyl group-containing diol | Group represented by Formula (1) (*) | Diisocyanate compound | Terminal functional group (**) | Synthetic method | Number-average molecular weight |
|---|---|---|---|---|---|---|
| A-13 | 19 | (1)-31 | (2)-8 | 3 | C | 54,000 |
| A-14 | 20 | (1)-35 | (2)-5 | 3 | C | 14,000 |
| A-15 | 25 | (1)-36 | (2)-2 | 4 | C | 10,000 |
| A-16 | 27 | (1)-5 | (2)-3 | 4 | C | 10,000 |
| A-17 | 29 | (1)-10 | (2)-4 | 5 | C | 8,000 |
| A-18 | 33 | (1)-14 | (2)-7 | 5 | C | 8,000 |
| A-19 | 39 | (1)-26 | (2)-8 | 6 | C | 10,000 |
| A-20 | 40 | (1)-10 | (2)-5 | 6 | C | 9,000 |
| A-21 | 3 | (1)-37 | (2)-2 | 1 | C | 18,000 |
| A-22 | 3 | (1)-38 | (2)-2 | 1 | C | 15,000 |
| (*) Group formed by reaction between carboxyl group and epoxy group<br>(**) Terminal functional groups 1 to 6 contain an ethylenically unsaturated group | | | | | | |

The number of the carboxyl group-containing diol in Table 1 is the same as the number in the group of compounds illustrated as preferred compounds of the carboxyl group-containing diol. The number of the group represented by Formula (1) is the same as the number in preferred examples of the group represented by Formula (1). In order to explain the numbers of the diisocyanate compounds and the numbers of the terminal functional groups, the corresponding structural formulae are shown below.

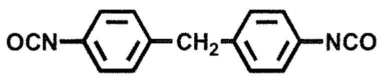
(2)-1

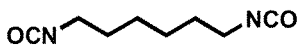
(2)-2

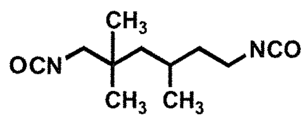
(2)-3

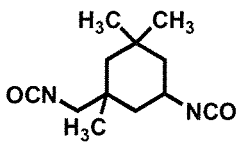
(2)-4

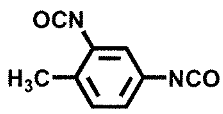
(2)-5

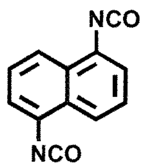
(2)-6

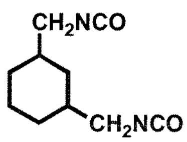
(2)-7

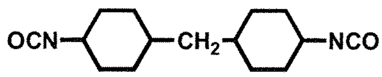
(2)-8

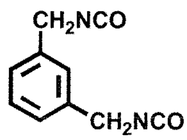
(2)-9

Terminal functional groups (wavy line portion denotes position of bonding).

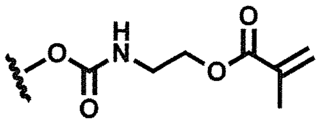

1

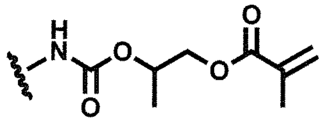

2

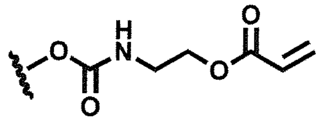

3

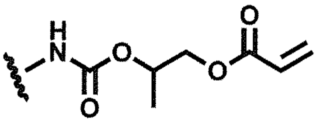

4

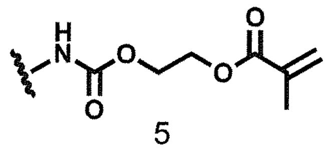

5

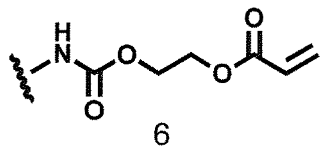

6

<Production Example 23: polyurethane D-1 production example>

A three-necked round-bottomed flask equipped with a stirring blade, a condenser, and a thermometer was charged with 106 parts (1.0 part by mole) of diethylene glycol (Tokyo Chemical Industry Co., Ltd.) and 92.0 parts (1.05 parts by mole) of ethylene carbonate (Tokyo Chemical Industry Co., Ltd.) and heated at 70°C for dissolution, 0.1 parts of tetrabutoxytitanium (Tokyo Chemical Industry Co., Ltd.) was added as a catalyst and a reaction was carried out at 145°C to 150°C for 24 hours. Subsequently, the diethylene glycol and ethylene carbonate were removed by distillation under reduced pressure, thus giving 88 parts of a polycarbonate diol. 0.07 parts of monobutyl phosphate (Tokyo Chemical Industry Co., Ltd.) was added to 88 parts of this polycarbonate diol and stirring was carried out at 80°C for 3 hours, thus deactivating the tetrabutoxytitanium. Subsequently, 6.3 parts (0.036 parts by mole) of 2,4-tolylene diisocyanate (diisocyanate compound (2)-5, Tokyo Chemical Industry Co., Ltd.), 1.0 part of 2,6-di-*tert*-butyl-4-methylphenol, 0.014 parts of adipic acid (Tokyo Chemical Industry Co., Ltd.), and 0.0014 parts of dibutyltin dilaurylate were added, and a reaction was carried out at 80°C for 3 hours, thus giving polyurethane D-1 (number-average molecular weight: 7,000).

<Production Example 24: polyurethane D-2 production example>

Polyurethane D-2 (number-average molecular weight: 7,000) was obtained in the same manner as in Production Example 23 except that the 6.3 parts (0.036 parts by mole) of 2,4-tolylene diisocyanate was changed to 9.2 parts (0.053 parts by mole).

<Production Example 25: polyurethane D-3 production example>

A three-necked round-bottomed flask equipped with a stirring blade, a condenser, and a thermometer was charged with 106 parts (1.0 part by mole) of diethylene glycol and 92.0 parts (1.05 parts by mole) of ethylene carbonate and heated at 70°C for dissolution, 0.1 parts of tetrabutoxytitanium was added as a catalyst, and a reaction was carried out at 145°C to 150°C for 24 hours. Subsequently, the diethylene glycol and ethylene carbonate were removed by distillation under reduced pressure, thus giving 88 parts of a polycarbonate diol. 0.07 parts of monobutyl phosphate was added to 88 parts of this polycarbonate diol and stirring was carried out at 80°C for 3 hours, thus deactivating the tetrabutoxytitanium. Subsequently, 6.3 parts (0.036 parts by mole) of 2,4-tolylene diisocyanate, 1.0 part of 2,6-di-*tert*-butyl-4-methylphenol, 0.014 parts of adipic acid, and 0.0014 parts of dibutyltin dilaurylate were added, and a reaction was carried out at 80°C for 3 hours. Subsequently, 3.75 parts (0.024 parts by mole) of 2-methacryloyloxyethyl isocyanate and 0.0014 parts of dibutyltin dilaurylate were added, and a reaction was carried out for a further 2 hours, thus giving polyurethane D-3 (number-average molecular weight: 7,000).

<Production Example 26: polyurethane D-4 production example>

A three-necked round-bottomed flask equipped with a stirring blade, a condenser, and a thermometer was charged with 106 parts (1.0 parts by mole) of diethylene glycol and 92.0 parts (1.05 parts by mole) of ethylene carbonate and was heated at 70°C for dissolution, 0.1 parts of tetrabutoxytitanium was added as a catalyst, and a reaction was carried out at 145°C to 150°C for 24 hours. Subsequently, the diethylene glycol and ethylene carbonate were removed by distillation under reduced pressure, thus giving 88 parts of a polycarbonate diol. 0.07 parts of monobutyl phosphate was added to 88 parts of this polycarbonate diol and stirring was carried out at 80°C for 3 hours, thus deactivating the tetrabutoxytitanium. Subsequently, 9.2 parts (0.053 parts by mole) of 2,4-tolylene diisocyanate, 1.0 part of 2,6-di-*tert*-butyl-4-methylphenol, 0.014 parts of adipic acid, and 0.0014 parts of dibutyltin dilaurylate were added, and a reaction

was carried out at 80°C for 3 hours. Subsequently, 3.46 parts (0.024 parts by mole) of 2-hydroxypropyl methacrylate and 0.0014 parts of dibutyltin dilaurylate were added, and a reaction was carried out for a further 2 hours, thus giving polyurethane D-4 (number-average molecular weight: 7,000).

<Production Example 27: polyurethane D-5 production example>

Polyurethane D-5 (number-average molecular weight: 7,500) was obtained in the same manner as in Production Example 25 except that diethylene glycol was replaced by triethylene glycol at the equivalent number of moles.

<Production Example 28: polyurethane D-6 production example>

Polyurethane D-6 (number-average molecular weight: 7,500) was obtained in the same manner as in Production Example 25 except that diethylene glycol was replaced by dipropylene glycol (Aldrich) and 2-methacryloyloxyethyl isocyanate was replaced by 2-acryloyloxyethyl isocyanate, each being at the equivalent number of moles.

<Production Example 29: polyurethane D-7 production example>

Polyurethane D-7 (number-average molecular weight: 900) was obtained in the same manner as in Production Example 26 except that diethylene glycol was replaced by tripropylene glycol (Aldrich) and 2-hydroxypropyl methacrylate was replaced by 2-hydroxypropyl acrylate, each being at the equivalent number of moles, and the reaction conditions after addition of the isocyanate compound were changed from 80°C, 3 hours to 60°C, 0.5 hours.

<Production Example 30: polyurethane D-8 production example>

Polyurethane D-8 (number-average molecular weight: 8,000) was obtained in the same manner as in Production Example 29 except that tripropylene glycol was replaced by di(4-hydroxybutyl) ether (Aldrich) and 2-hydroxypropyl acrylate was replaced by 2-hydroxyethyl methacrylate, each being at the equivalent number of moles.

<Production Example 31: polyurethane D-9 production example>

Polyurethane D-9 (number-average molecular weight: 52,000) was obtained in the same manner as in Production Example 29 except that tripropylene glycol was replaced by di(6-hydroxyhexyl) ether (Aldrich) and 2-hydroxypropyl acrylate was replaced by 2-hydroxyethyl acrylate, each being at the equivalent number of moles, and the reaction conditions after addition of the isocyanate compound were changed from 60°C, 0.5 hours to 100°C, 6 hours.

The methods of synthesizing the polyurethane of Component D are categorized into Methods E and F below.

Method E: a polyurethane is formed by a polyaddition reaction between a polycarbonate diol compound and a diisocyanate compound (there is no polymerizable unsaturated group at a terminal of the polyurethane resin).

Method F: a polyurethane is formed by a polyaddition reaction between a polycarbonate diol compound and a diisocyanate compound, and an ethylenically unsaturated group is then introduced at a terminal of the polyurethane resin.

The starting materials, synthetic methods, and types of terminal functional group of polyurethanes D-1 to D-9 are shown in Table 2.

(Table 2)

| (Component D) polyurethane | Carbonate diol compound of Formula (CD) | | Diisocyanate compound | Terminal functional group (*) | Synthetic method | Number-average molecular weight |
|---|---|---|---|---|---|---|
| | $R_1$ | n | | | | |
| D-1 | $-(CH_2)_2-$ | 2 | (2)-5 | -OH | E | 7,000 |
| D-2 | $-(CH_2)_2-$ | 2 | (2)-5 | -NCO | E | 7,000 |
| D-3 | $-(CH_2)_2-$ | 2 | (2)-5 | 1 | F | 7,000 |
| D-4 | $-(CH_2)_2-$ | 2 | (2)-5 | 2 | F | 7,000 |
| D-5 | $-(CH_2)_2-$ | 3 | (2)-5 | 1 | F | 7,500 |
| D-6 | $-(CH_2)_3-$ | 2 | (2)-5 | 3 | F | 7,500 |

(continued)

| (Component D) polyurethane | Carbonate diol compound of Formula (CD) | | Diisocyanate compound | Terminal functional group (*) | Synthetic method | Number-average molecular weight |
|---|---|---|---|---|---|---|
| | $R_1$ | n | | | | |
| D-7 | $-(CH_2)_3-$ | 3 | (2)-5 | 4 | F | 900 |
| D-8 | $-(CH_2)_4-$ | 2 | (2)-5 | 5 | F | 8,000 |
| D-9 | $-(CH_2)_6-$ | 2 | (2)-5 | 6 | F | 52,000 |
| (*)Terminal functional groups 1 to 6 contain an ethylenically unsaturated group | | | | | | |

<Example 1>

1. Preparation of laser-engravable resin composition 1

A three-necked round-bottomed flask equipped with a stirring blade, a condenser, and a thermometer was charged with 135 parts of polyurethane A-3 synthesized in Production Example 1 as (Component A), 22.5 parts of trimethylolpropane trimethacrylate (Shin-Nakamura Chemical Co., Ltd.) and 67.5 parts of phenoxyethyl methacrylate (Shin-Nakamura Chemical Co., Ltd.) as ethylenically unsaturated compounds (Component B), 6.3 parts of Perbutyl Z (NOF Corporation) as polymerization initiator (Component C), and 3.9 parts of Ketjen Black EC600JD (carbon black, Lion Corporation) as a photothermal conversion agent that can absorb light at wavelengths of 700 to 1,300 nm (Component E), and stirring was carried out at 40°C for 30 minutes. Subsequently, 47.0 parts of hydrolyzable silyl group- and/or silanol group-containing organosilicon compound (F-17) (Component F) and 2.0 parts of DBU as an alcohol-exchange catalyst were added, and stirring was carried out at 40°C for 10 minutes. This operation gave flowable coating solution 1 for a relief-forming layer (laser-engravable resin composition 1).

2. Preparation of laser-engravable flexographic printing plate precursor 1

A spacer (frame) having a predetermined thickness was placed on a PET substrate, and coating solution 1 for a relief-forming layer obtained above was gently cast so that it did not overflow from the spacer (frame) to thus provide a relief-forming layer having a thickness of about 1 mm, thereby producing laser-engravable flexographic printing plate precursor 1.

3. Preparation of flexographic printing plate 1

The relief-forming layer of the precursor thus obtained was heated at 100°C for 3 hours to thus thermally crosslink the relief-forming layer. After the spacer and the PET were removed from laser-engravable printing plate precursor 1, the crosslinked relief-forming layer (PET face) was subjected to laser engraving.

As semiconductor laser engraving equipment, SDL-6390 (JDSU, wavelength 915 nm) laser recording equipment with a fiber-coupled semiconductor laser (FC-LD) having a maximum output of 8.0 W was used, and engraving was carried out under conditions of laser output: 7.5 W, head speed: 409 mm/sec, pitch setting: 2,400 DPI. DPI denotes dots/inch.

As carbon dioxide laser engraving equipment, a Helios 6010 (STORK) was used, and engraving was carried out at 12,000 revolutions/min (engraving depth 500 μm).

The engraving pattern was a raster-engraved pattern of a 1 cm square solid printed area for rinsing properties evaluation. The engraving depth was 500 μm. For halftone shape evaluation and printing durability evaluation, an engraved pattern with halftone dots having a width of 32 μm and a depth of 100 μm was used.

When the Shore A hardness of the relief layer was measured, it was found to be 72°.

<Examples 2 to 39 and Comparative Examples 1 to 6>

Laser-engravable resin compositions, laser-engravable flexographic printing plate precursors, and flexographic printing plates of Examples 2 to 39 and Comparative Examples 1 to 6 were obtained by the same method as in Example 1 except that Component A to Component F were replaced by the compounds shown in Table 3 and Table 4.

Examples 2 to 7 were prepared by the same method as in Example 1 except that Components A to C and E

were replaced by the same number of parts by mass and Component F was replaced by the equivalent number of moles.

Example 8 was prepared by the same method as in Example 1 except that the 135 parts of A-3 in Example 1 was replaced by 70 parts of A-2 and the 65 parts of D-1 (Component D), Components B, C and E were replaced by the same number of parts by mass, and Component F was replaced by the equivalent number of moles.

Examples 9 to 26 were prepared by the same method as in Example 8 except that Components A to E were replaced by the same number of parts by mass and Component F was replaced by the equivalent number of moles.

Examples 27 to 39 were prepared by the same method as in Example 1 except that Components A to C and E were replaced by the same number of parts by mass and Component F was replaced by the equivalent number of moles.

Comparative Examples 1 to 4 were prepared by the same method as in Example 1 except that Component D was changed to 135 parts, Component B, C and E were replaced by the same number of parts by mass, and Component F was replaced by the equivalent number of moles.

Comparative Example 5 was prepared by the same method as in Comparative Example 3 except that Component F was replaced by Sylosphere C-1504 (Fuji Silysia Chemical Ltd.) as porous silica at 5 parts relative to 100 parts of polyurethane (D-3).

Comparative Example 6 was prepared by the same method as in Comparative Example 4 except that Component F was replaced by KF-410 (Shin-Etsu Chemical Co., Ltd.) as silicone oil at 8 parts relative to 100 parts of polyurethane (D-4).

Furthermore, laser engraving of laser-engravable printing plate precursors obtained in Examples 2 to 39 and Comparative Examples 1 to 6 was carried out using a semiconductor laser when the photothermal conversion agent that can absorb light at wavelengths of 700 to 1,300 nm as Component E was added and using a carbon dioxide laser when it was not added.

(Table 3)

| | (Component A) polyurethane | R, R', R" in Formula (1) | | | (Component D) carbonate bond-containing polyurethane | (Component B) polymerizable compound (mass ratio) | (Component C) polymerization initiator | (Compo -nent E) photothermal conversion agent | (Component F) organosilicon compound |
|---|---|---|---|---|---|---|---|---|---|
| | | R | Substituent on R' (alkyl group) | R" | | | | | |
| Ex. 1 | A-3 | H | Alkoxy group | H | - | B-3/B-4 = 1/3 | C-3 | E-1 | F-17 |
| Ex. 2 | A-21 | Alkyl group | Alkoxy group | H | - | B-3/B-4 = 1/3 | C-3 | E-1 | F-17 |
| Ex. 3 | A-22 | H | Alkoxy group | Alkyl group | - | B-3/B-4 = 1/3 | C-3 | E-1 | F-17 |
| Ex. 4 | A-5 | H | Unsubstituted | H | - | B-3/B-4 = 1/3 | C-3 | E-1 | F-14 |
| Ex. 5 | A-2 | H | Alkoxy group | H | - | B-3/B-4 = 1/3 | C-3 | E-1 | F-14 |
| Ex. 6 | A-4 | H | Alkoxy group | H | - | B-3/B-4 = 1/3 | C-3 | E-1 | F-17 |
| Ex. 7 | A-1 | H | Alkoxy group | H | - | B-3/B-4 = 1/3 | C-3 | E-1 | F-14 |
| Ex. 8 | A-2 | H | Alkoxy group | H | D-1 | B-3/B-4 = 1/3 | C-3 | E-1 | F-14 |
| Ex. 9 | A-3 | H | Alkoxy group | H | D-3 | B-3/B-4 = 1/3 | C-3 | E-1 | F-24 |
| Ex. 10 | A-4 | H | Alkoxy group | H | D-4 | B-3/B-4 = 1/3 | C-3 | E-1 | F-24 |
| Ex. 11 | A-5 | H | Unsubstituted | H | D-2 | B-1 | C-1 | - | F-1 |
| Ex. 12 | A-6 | Aliphatic ring | | H | D-5 | B-1 | C-1 | - | F-4 |
| Ex. 13 | A-7 | H | Alkoxy group | H | D-6 | B-1 | C-1 | E-1 | - |

(continued)

| | (Component A) polyurethane | R, R', R" in Formula (1) | | | (Component D) carbonate bond-containing polyurethane | (Component B) polymerizable compound (mass ratio) | (Component C) polymerization initiator | (Compo -nent E) photothermal conversion agent | (Component F) organosilicon compound |
|---|---|---|---|---|---|---|---|---|---|
| | | R | Substituent on R' (alkyl group) | R" | | | | | |
| Ex. 14 | A-8 | H | Unsubstituted | H | D-7 | B-1 | C-1 | E-1 | - |
| Ex. 15 | A-9 | Aliphatic ring | | H | D-8 | B-1 | C-1 | - | - |
| Ex. 16 | A-10 | H | Halogen atom | H | D-9 | B-2 | C-3 | E-1 | F-15 |
| Ex. 17 | A-11 | Aliphatic ring | | H | D-3 | B-2 | C-3 | E-1 | F-16 |
| Ex. 18 | A-12 | Aliphatic ring | | H | D-3 | B-2 | C-3 | E-1 | F-17 |
| Ex. 19 | A-13 | H | Carbonyloxy group | H | D-3 | B-2 | C-3 | E-1 | F-18 |
| Ex. 20 | A-14 | Aliphatic ring | | Alkyl group | D-3 | B-2 | C-3 | E-1 | F-19 |
| Ex. 21 | A-15 | Aliphatic ring | | Alkyl group | D-3 | B-1 | C-2 | E-1 | F-20 |
| Ex. 22 | A-16 | H | Alkoxy group | H | D-4 | B-1 | C-2 | E-1 | F-21 |
| Ex. 23 | A-17 | H | Alkoxy group | H | D-4 | B-2 | C-4 | E-2 | F-22 |
| Ex. 24 | A-18 | H | Unsubstituted | H | D-4 | B-2 | C-4 | E-2 | F-23 |
| Ex. 25 | A-19 | Aliphatic ring | | H | D-4 | B-2 | C-5 | E-2 | F-24 |
| Ex. 26 | A-20 | H | Alkoxy group | H | D-4 | B-2 | C-5 | E-2 | F-17 |

(continued)

| | (Component A) polyurethane | R, R', R" in Formula (1) | | | (Component D) carbonate bond-containing polyurethane | (Component B) polymerizable compound (mass ratio) | (Component C) polymerization initiator | (Compo -nent E) photothermal conversion agent | (Component F) organosilicon compound |
|---|---|---|---|---|---|---|---|---|---|
| | | R | Substituent on R' (alkyl group) | R" | | | | | |
| Ex. 27 | A-2 | H | Alkoxy group | H | - | B-2 | C-3 | E-2 | F-17 |
| Ex. 28 | A-3 | H | Alkoxy group | H | - | B-2 | C-3 | E-2 | F-17 |
| Ex. 29 | A-4 | H | Alkoxy group | H | - | B-2 | C-3 | E-2 | F-17 |
| Ex. 30 | A-4 | H | Alkoxy group | H | - | B-2 | C-3 | E-2 | F-24 |
| Ex. 31 | A-5 | H | Unsubstituted | H | - | B-2 | C-3 | E-2 | F-24 |
| Ex. 32 | A-6 | Aliphatic ring | | H | - | B-2 | C-3 | E-2 | F-24 |
| Ex. 33 | A-17 | H | Alkoxy group | H | - | B-2 | C-3 | E-2 | F-1 |
| Ex. 34 | A-17 | H | Alkoxy group | H | - | B-2 | C-6 | E-2 | F-1 |
| Ex. 35 | A-18 | H | Unsubstituted | H | - | B-2 | C-6 | E-2 | F-4 |
| Ex. 36 | A-19 | Aliphatic ring | | H | - | B-2 | C-6 | E-2 | F-4 |
| Ex. 37 | A-20 | H | Alkoxy group | H | - | B-2 | C-6 | E-2 | F-14 |
| Ex. 38 | A-20 | H | Alkoxy group | H | - | B-2 | C-6 | E-2 | F-22 |
| Ex. 39 | A-20 | H | Alkoxy group | H | - | B-2 | C-6 | E-2 | F-25 |

(Table 4)

| | (Component A) polyurethane | (Component D) carbonate bond-containing polyurethane | (Component B) polymerizable compound (mass ratio) | (Component C) polymerization initiator | (Component E) photothermal conversion agent | (Component F) organosilicon compound |
|---|---|---|---|---|---|---|
| Comp. Ex. 1 | None | D-1 | B-1 | C-6 | E-2 | None |
| Comp. Ex. 2 | None | D-2 | B-2 | C-6 | E-2 | F-14 |
| Comp. Ex. 3 | None | D-3 | B-3/B-4 = 1/3 | C-6 | E-2 | None |
| Comp. Ex. 4 | None | D-4 | B-3/B-4 = 1/3 | C-6 | E-2 | F-14 |
| Comp. Ex. 5 | None | D-3 | B-3/B-4 = 1/3 | C-6 | E-2 | - (porous silica) |
| Comp. Ex. 6 | None | D-4 | B-3/B-4 = 1/3 | C-6 | E-2 | - (silicone oil) |

In Table 3 and Table 4, the compound number for Component F is the same as the number in the group of compounds illustrated as preferred examples of Component F. Furthermore, the compounds of the compound numbers of Component B, Component C, and Component E are explained at the end of the Examples.

(Evaluation)

<Evaluation of non-tackiness>

A paper powder (ZELATEX JAPAN) was attached to one side of a flexographic printing plate precursor having a 3 cm x 3 cm area produced by the method above, and surplus paper powder was removed by lightly tapping. The amount of paper powder attached was calculated using the equation below and used as an index of non-tackiness (units being converted into g/$m^2$). The smaller the amount of paper powder attached, the better the non-tackiness.

(mass of flexographic printing plate precursor after attachment of paper powder) - (mass of flexographic printing plate precursor before attachment of paper powder) = (amount of paper powder attached)

<Evaluation of rinsing properties and residue removability >

A rinsing liquid was prepared by the method below. A 48% aqueous solution of NaOH (Wako Pure Chemical Industries, Ltd.) was added dropwise to 500 mL of pure water while stirring to adjust the pH to 12.5.

The rinsing liquid thus prepared was dropped (about 100 mL/$m^2$) by means of a pipette onto a flexographic printing plate engraved by the method above so that the plate surface became uniformly wet, was allowed to stand for 1 min, and rubbed using a toothbrush (Clinica Toothbrush Flat, Lion Corporation) 20 times (30 sec) in parallel to the plate with a load of 200 gf (1.96 N). Subsequently, the plate face was washed with running water, moisture of the plate face was removed, and it was dried naturally for approximately 1 hour.

The rinsed plate surface was examined using a microscope (Keyence Corporation) at a magnification of 100x, and residue on the plate that could not be removed by washing was evaluated. The evaluation criteria were as follows.

A: no residue at all on the plate.
B: only slight residue remained on bottom parts (recessed parts) of the image.
C: slight residue remained on protruding parts of the image, and slight residue remained on bottom parts (recessed parts) of the image.
D: slight residue remained on protruding parts of the image, and residue remained on bottom parts (recessed parts) of the image.
E: residue remained on and was attached to the entire plate face.

<Evaluation of halftone shape>

The halftone area of an engraved pattern obtained in the Examples was examined using an S-4300 field-emission scanning electronic microscope (Hitachi, Ltd.). Evaluation was carried out by checking for the presence of 'defects' in the halftone shape.

<Evaluation of printing durability>

A flexographic printing plate that had been obtained was set in a printer (Model ITM-4, IYO KIKAI SEISAKUSHO Co., Ltd.), as the ink Aqua SPZ16 Red aqueous ink (Toyo Ink Manufacturing Co., Ltd.) was used without dilution, and printing was carried out continuously using Full Color Form M 70 (Nippon Paper Industries Co., Ltd., thickness 100 μm) as the printing paper, 1% to 10% highlights being checked for the printed material. Completion of printing was defined as being when halftone dots were not printed, and the length (meters) of paper printed up to the completion of printing was used as an index. The larger the value, the better the evaluation of printing durability.

<Method of measuring Shore A hardness >

Shore A hardness at 25°C was measured by the method described above.

The results are shown in Table 5.

The structural formula or compound name of each of the components used in the Examples and Comparative Examples are shown below.

(Component B) ethylenically unsaturated compound

B-1: glycerol dimethacrylate (Tokyo Chemical Industry Co., Ltd.)
B-2: 1,6-hexanediol diacrylate (Tokyo Chemical Industry Co., Ltd.)
B-3: trimethylolpropane trimethacrylate, NK Ester TMTP (Shin-Nakamura Chemical Co., Ltd.)
B-4: phenoxyethylene glycol methacrylate, NK Ester PHE-1G (Shin-Nakamura Chemical Co., Ltd.)

(Component C) thermopolymerization initiator

C-1: 2,2-bis(*tert*-butylperoxy)butane (NOF Corporation, organic peroxide, Perhexa22, peroxyketal, 10 hours half-life temperature: 103.1 °C) C-2: dicumyl peroxide (NOF Corporation, organic peroxide, Percumyl D, dialkyl peroxide, 10 hours half-life temperature: 116.4°C)
C-3: *tert*-butyl peroxybenzoate (NOF Corporation, organic peroxide, Perbutyl Z, peroxy ester, 10 hours half-life temperature: 104.3°C)
C-4: dibenzoyl peroxide (NOF Corporation, organic peroxide, Nyper BW, diacyl peroxide, 10 hours half-life temperature: 73.6°C)
C-5: calcium peroxide (Kanto Kagaku, inorganic peroxide)
C-6: 1,1-bis(*tert*-butylperoxy)cyclohexane (NOF Corporation, organic peroxide, PerhexaC75 (EB))

(Component E) photothermal conversion agent that can absorb light at wavelengths of 700 to 1,300 nm

E-1: Ketjen Black EC600JD (Lion Corporation)
E-2: carbon black (Tokai Carbon Co., Ltd., N330, HAF carbon)

(Alcohol reaction catalyst)

DBU: 1,8-diazabicyclo[5.4.0]undec-7-ene (San-Apro Ltd.)

(Table 5)

| | Non-tackiness Amount of paper powder attached (g/$m^2$) | Residue removability | Halftone shape | Printing durability (m) | Shore A hardness (°) |
|---|---|---|---|---|---|
| Ex. 1 | 9.1 | A | Good (conical) | 2,600 | 72 |
| Ex. 2 | 9.3 | A | Good (conical) | 2,750 | 72 |
| Ex. 3 | 9.7 | A | Good (conical) | 1,950 | 68 |
| Ex. 4 | 9.5 | A | Good (conical) | 2,050 | 73 |
| Ex. 5 | 9.3 | A | Good (conical) | 2,700 | 72 |
| Ex. 6 | 9.2 | A | Good (conical) | 2,650 | 71 |
| Ex. 7 | 9.3 | A | Good (conical) | 2,800 | 73 |

(continued)

| | Non-tackiness Amount of paper powder attached (g/m$^2$) | Residue removability | Halftone shape | Printing durability (m) | Shore A hardness (°) |
|---|---|---|---|---|---|
| Ex. 8 | 8.7 | A | Good (conical) | 3,350 | 77 |
| Ex. 9 | 8.9 | A | Good (conical) | 3,200 | 75 |
| Ex. 10 | 8.9 | A | Good (conical) | 3,250 | 76 |
| Ex. 11 | 9.3 | A | Good (conical) | 2,850 | 73 |
| Ex. 12 | 9.9 | A | Good (conical) | 1,900 | 68 |
| Ex. 13 | 8.8 | B | Good (conical) | 3,000 | 75 |
| Ex. 14 | 9.1 | B | Good (conical) | 2,500 | 71 |
| Ex. 15 | 9.8 | B | Good (conical) | 1,900 | 69 |
| Ex. 16 | 9.2 | A | Good (conical) | 2,750 | 73 |
| Ex. 17 | 9.9 | A | Good (conical) | 1,900 | 71 |
| Ex. 18 | 9.8 | A | Good (conical) | 1,900 | 69 |
| Ex. 19 | 9.7 | A | Good (conical) | 1,850 | 68 |
| Ex. 20 | 9.8 | A | Good (conical) | 1,900 | 70 |
| Ex. 21 | 9.8 | A | Good (conical) | 1,900 | 70 |
| Ex. 22 | 8.9 | A | Good (conical) | 3,350 | 76 |
| Ex. 23 | 8.7 | A | Good (conical) | 3,300 | 77 |
| Ex. 24 | 9.1 | A | Good (conical) | 2,700 | 71 |
| Ex. 25 | 9.8 | A | Good (conical) | 1,900 | 72 |
| Ex. 26 | 8.9 | A | Good (conical) | 3,350 | 75 |
| Ex. 27 | 9.2 | A | Good (conical) | 2,700 | 73 |
| Ex. 28 | 9.3 | A | Good (conical) | 2,800 | 73 |
| Ex. 29 | 9.3 | A | Good (conical) | 2,800 | 72 |

(continued)

| | Non-tackiness Amount of paper powder attached (g/$m^2$) | Residue removability | Halftone shape | Printing durability (m) | Shore A hardness (°) |
|---|---|---|---|---|---|
| Ex. 30 | 9.2 | A | Good (conical) | 2,750 | 71 |
| Ex. 31 | 9.5 | A | Good (conical) | 2,350 | 70 |
| Ex. 32 | 9.8 | A | Good (conical) | 1,900 | 68 |
| Ex. 33 | 9.2 | A | Good (conical) | 2,700 | 70 |
| Ex. 34 | 9.2 | A | Good (conical) | 2,750 | 74 |
| Ex. 35 | 9.5 | A | Good (conical) | 2,350 | 73 |
| Ex. 36 | 9.9 | A | Good (conical) | 1,950 | 70 |
| Ex. 37 | 9.3 | A | Good (conical) | 2,650 | 69 |
| Ex. 38 | 9.0 | A | Good (conical) | 2,800 | 70 |
| Ex. 39 | 9.0 | A | Good (conical) | 2,750 | 72 |
| Comp. Ex. 1 | 24.2 | E | Good (conical) | 1,500 | 52 |
| Comp. Ex. 2 | 22.9 | D | Good (conical) | 2,000 | 53 |
| Comp. Ex. 3 | 18.8 | E | Good (conical) | 1,500 | 58 |
| Comp. Ex. 4 | 18.0 | D | Good (conical) | 2,000 | 60 |
| Comp. Ex. 5 | 11.5 | B | Poor (defects present) | 500 | 65 |
| Comp. Ex. 6. | 11.0 | B | Good (conical) | 500 | 59 |

## Claims

**1.** A resin composition for a laser-engravable flexographic printing plate, comprising

(Component A) a polyurethane resin having a group represented by Formula (1),
(Component B) an ethylenically unsaturated compound, and
(Component C) a polymerization initiator

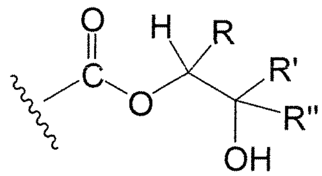

(1)

wherein in the Formula, R and R" independently denote a hydrogen atom or an alkyl group, R' denotes an alkyl group, R and R' may be linked to form a ring, and the wavy line portion denotes the position of bonding.

**2.** The resin composition for a laser-engravable flexographic printing plate according to Claim 1, wherein R and R" are hydrogen atoms and R' is an alkyl group.

**3.** The resin composition for a laser-engravable flexographic printing plate according to Claim 1 or 2, wherein R' is an alkyl group that is substituted with an alkoxy group.

**4.** The resin composition for a laser-engravable flexographic printing plate according to any one of Claims 1 to 3, wherein the group represented by Formula (1) is a group formed by reacting a carboxyl group and an epoxy group.

**5.** The resin composition for a laser-engravable flexographic printing plate according to any one of Claims 1 to 4, wherein the resin composition further comprises (Component D) a carbonate bond-containing polyurethane resin.

**6.** The resin composition for a laser-engravable flexographic printing plate according to Claim 5, wherein Component A and Component D are both resins having a number-average molecular weight of 1,000 to 50,000.

**7.** The resin composition for a laser-engravable flexographic printing plate according to Claim 5 or 6, wherein Component A and Component D both have an ethylenically unsaturated group.

**8.** The resin composition for a laser-engravable flexographic printing plate according to any one of Claims 1 to 7, wherein Component C is a thermopolymerization initiator.

**9.** The resin composition for a laser-engravable flexographic printing plate according to Claim 8, wherein the thermopolymerization initiator is an organic peroxide.

**10.** The resin composition for a laser-engravable flexographic printing plate according to any one of Claims 1 to 9, wherein the resin composition further comprises (Component E) a photothermal conversion agent that can absorb light at wavelengths of 700 to 1,300 nm.

**11.** The resin composition for a laser-engravable flexographic printing plate according to Claim 10, wherein Component E is carbon black.

**12.** The resin composition for a laser-engravable flexographic printing plate according to any one of Claims 1 to 11, wherein the resin composition further comprises (Component F) a hydrolyzable silyl group-and/or silanol group-containing organosilicon compound.

**13.** The resin composition for a laser-engravable flexographic printing plate according to Claim 12, wherein Component F is an oxyalkylene group-containing organosilicon compound.

**14.** A laser-engravable flexographic printing plate precursor comprising a crosslinked relief-forming layer formed by crosslinking a relief-forming layer comprising the resin composition for a laser-engravable flexographic printing plate according to any one of Claims 1 to 13.

**15.** A process for producing a laser-engravable flexographic printing plate precursor, comprising
a layer formation step of forming a relief-forming layer comprising the resin composition for a laser-engravable flexographic printing plate according to any one of Claims 1 to 13, and
a crosslinking step of crosslinking the relief-forming layer to thus obtain a flexographic printing plate precursor comprising a crosslinked relief-forming layer.

**16.** A process for making a flexographic printing plate, comprising an engraving step of laser-engraving the crosslinked relief-forming layer of the laser-engravable flexographic printing plate precursor according to Claim 14 to thus form a relief layer.

**17.** A flexographic printing plate comprising a relief layer made by the process for making a flexographic printing plate according to Claim 16.

**18.** The flexographic printing plate according to Claim 17, wherein the relief layer has a thickness of at least 0.05 mm but no greater than 10 mm.

**19.** The flexographic printing plate according to Claim 17 or 18, wherein the relief layer has a Shore A hardness of at least 50° but no greater than 90°.

**INTERNATIONAL SEARCH REPORT**

International application No. PCT/JP2013/051546

A. CLASSIFICATION OF SUBJECT MATTER
*B41N1/12*(2006.01)i, *C08F2/44*(2006.01)i, *C08F283/00*(2006.01)i, *G03F7/00*(2006.01)i, *G03F7/035*(2006.01)i

According to International Patent Classification (IPC) or to both national classification and IPC

B. FIELDS SEARCHED

Minimum documentation searched (classification system followed by classification symbols)
B41N1/12, C08F2/44, C08F283/00, G03F7/00, G03F7/035

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-32378 A (Asahi Kasei E-materials Corp.), 17 February 2011 (17.02.2011), (Family: none) | 1-19 |
| A | JP 2011-31505 A (Asahi Kasei E-materials Corp.), 17 February 2011 (17.02.2011), (Family: none) | 1-19 |
| A | JP 2009-203362 A (Asahi Kasei Chemicals Corp.), 10 September 2009 (10.09.2009), (Family: none) | 1-19 |
| A | JP 2011-136430 A (Fujifilm Corp.), 14 July 2011 (14.07.2011), & US 2011/156318 A1 | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 March, 2013 (19.03.13) | 02 April, 2013 (02.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/051546

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-189877 A (Fujifilm Corp.), 21 August 2008 (21.08.2008), (Family: none) | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4024136 B
- JP 2011062904 A
- JP 4475505 B
- JP 2011136430 A
- JP 2009204962 A
- JP 2009255510 A
- JP 46027926 B
- JP 51047334 B
- JP 57196231 A
- JP 59005240 A
- JP 59005241 A
- JP 2226149 A
- JP 1165613 A
- JP 54021726 B
- JP 48041708 B
- JP 51037193 A
- JP 2000322 B
- JP 2016765 B
- JP 58049860 B
- JP 56017654 B
- JP 62039417 B
- JP 62039418 B
- JP 63277653 A
- JP 63260909 A
- JP 1105238 A
- JP 48064183 A
- JP 49043191 B
- JP 52030490 B
- JP 46043946 B
- JP 1040337 B
- JP 1040336 B
- JP 2025493 A
- JP 61022048 A
- JP 2008063554 A
- JP 2011136431 A
- JP 5029648 B
- JP 2009178869 A
- JP 2011136455 A
- JP 2009172658 A
- JP 2009214334 A


### Non-patent literature cited in the description


- *Industrial and Engineering Chemistry,* 1956, vol. 48 (1), 86-93
- *Journal of the Adhesion Society of Japan,* 1984, vol. 20 (7), 300-308
- Senryo Binran. 1970
- Saishin Ganryo Binran. 1977
- Saishin Ganryo Ouyogijutsu. CMC Publishing, 1986
- Insatsu Inki Gijutsu. CMC Publishing, 1984